# EUROPÄISCHE PATENTSCHRIFT

(11) **EP 3 143 912 B1**
(45) Veröffentlichungstag und Bekanntmachung des Hinweises auf die Patenterteilung: **23.10.2019**
(21) Anmeldenummer: 16182812.4
(22) Anmeldetag: 04.08.2016
(51) Int. Cl.: A47J 31/36

(54) **GETRÄNKEZUBEREITUNGSVORRICHTUNG SOWIE BETRIEBSVERFAHREN**
BEVERAGE PREPARATION DEVICE AND METHOD OF OPERATION
DISPOSITIF DE PRÉPARATION DE BOISSONS ET PROCÉDÉ DE FONCTIONNEMENT

(30) Priorität: 08.09.2015 DE 102015115079
(43) Veröffentlichungstag der Anmeldung: 22.03.2017
(73) Patentinhaber: Eugster/Frismag AG, 8580 Amriswil (CH)
(72) Erfinder: Riessbeck, Wolfgang, 8597 Landschlacht (CH); Peyrot, Pascal, 9402 Mörschwil (CH); Oberholzer, Arnold, 9200 Gossau (CH)
(74) Vertreter: Patentanwälte Behrmann Wagner PartG mbB

(56) Entgegenhaltungen:
- EP-A1- 2 687 133
- EP-A2- 2 218 370
- WO-A1-2013/153526
- WO-A1-2014/132158
- WO-A1-2015/084199

## Beschreibung

Die Erfindung betrifft eine Getränkezubereitungsvorrichtung, insbesondere eine Kapselmaschine, ganz besonders bevorzugt eine Kaffeekapselmaschine, zum Herstellen von Getränken, insbesondere Heiß- und/oder Kaltgetränken aus Getränkesubstratkapseln (Kapseln), bevorzugt aus Kaffeekapseln gemäß dem Oberbegriff des Anspruchs 1, mit einer Injektionseinheit zum Auflösen und/oder Auslaugen von in einer Getränkesubstratkapsel bevorratetem Getränkesubstrat und mit Wasserversorgungsmitteln, insbesondere umfassend eine Pumpe und/oder einen Festwasseranschluss, zum Versorgen der Injektionseinheit mit Wasser (zum vorerwähnten Auflösen und/oder Auslaugen des Getränkesubstrates), wobei die, bevorzugt als Brüheinheit ausgebildete, Injektionseinheit, eine, bevorzugt als Brühkammer ausgebildete, Injektionskammer zur Aufnahme der Getränkesubstratkapsel aufweist, umfassend ein erstes Injektionskammerteil, bevorzugt ein erstes Brühkammerteil, das translatorisch relativ zu einem, bevorzugt ortsfesten, zweiten Injektionskammerteil, bevorzugt zweiten Brühkammerteil, der Injektionskammer zum Öffnen und Schließen der Injektionskammer entlang einer Verstellachse verstellbar ist, wobei das erste Injektionskammerteil eine Getränkekapselaufnahme aufweist, um die Getränkekapsel bei geöffneter Injektionskammer an einer Beladeposition aufnehmen zu können und dass das erste Injektionskammerteil zusammen mit der Getränkekapselaufnahme translatorisch, insbesondere rein translatorisch, zu einer Zwischenposition in Richtung des zweiten Injektionskammerteils entlang der Verstellachse verstellbar ist, und dass dem ersten Injektionskammerteil Verriegelungs- und Vorschubmittel zugeordnet sind, die derart ausgebildet und angeordnet ist, dass das erste Injektionskammerteil durch Rotieren von Betätigungsmitteln der Verriegelungs- und Vorschubmittel um eine Rotationsachse translatorisch aus der Zwischenposition in Richtung des zweiten Injektionskammerteils entlang der Verstellachse in eine Endposition verstellbar ist, in der die Injektionskammer geschlossen und das die Injektionskammer verriegelt ist, d.h. das erste Injektionskammerteil gegen eine translatorische Zurückbewegung durch Zugkraftbeaufschlagung von außen sowie durch eine Druckkraftbeaufschlagung von innen durch Wasserinjektion in die Beladeposition blockiert ist.

Die Erfindung betrifft ferner ein Verfahren zum Betreiben einer solchen Getränkezubereitungsvorrichtung gemäß Anspruch 14.

Bei sogenannten Kapselmaschinen, bei denen Getränke durch Injektion von Wasser in Getränkesubstratkapseln hergestellt werden, wird üblicherweise die Getränkesubstratkapsel in eine offene Injektionskammer, in der Regel eine Brühkammer gelegt, woraufhin die Injektionskammer, meist über eine Schwenkhebelbewegung verschlossen und dabei die Getränkesubstratkapsel beidseitig geöffnet wird, um auf einer ersten Seite von Wasserversorgungsmitteln zur Verfügung gestelltes Wasser, in der Regel Heißwasser zu injizieren und gegenüberliegend das fertige Getränk herauszuleiten.

Dabei wird zwischen sogenannten geschlossenen Injektionskammern und offenen Injektionskammern unterschieden, wobei im Falle von geschlossenen Injektionskammern die Kapsel vollumfänglich in der Kammer aufgenommen ist und die Injektionskammerteile vollumfänglich unmittelbar gegeneinander gedichtet werden, während bei den offenen Injektionskammern die Injektionskammerteile nicht oder nur abschnittsweise gegeneinander, sondern gegen die dann meist aus Hartplastik ausgebildete Kapsel gedichtet werden, die somit einen Bestandteil der Injektionskammer bildet.

Aus der EP 24 05 790 A1 ist eine Getränkezubereitungsvorrichtung bekannt geworden, bei welcher die Getränkesubstratkapsel über eine schräge Rutsche in ein Injektionskammerteil überführt wird, woraufhin dann die Injektionskammer mittels eines weiteren, gegenüberliegenden Injektionskammerteils verschlossen wird, welches hierfür translatorisch entlang einer Verstellachse auf das die Getränkesubstratkapsel aufweisende Injektionskammerteil verstellt wird. Zum Verstellen dieses translatorisch verstellbaren Injektionskammerteils ist ein Schwenkhebelmechanismus vorgesehen.

Als nachteilig bei den bekannten Getränkezubereitungsvorrichtungen wird empfunden, dass die Getränkesubstratkapsel entweder manuell oder über eine Rutsche prinzipbedingt einem ortsfest angeordneten Injektionskammerteil zugeführt werden muss, woraufhin dann die Injektionskammer durch Verstellen des weiteren Injektionskammerteils verschlossen werden muss. Es besteht jedoch der Wunsch nach Kapsel-Getränkezubereitungsvorrichtungen, bei der denen die Positionierung der Getränkesubstratkapsel nicht unmittelbar in einem feststehenden Injektionskammerteil erfolgen muss, sondern bei der die Getränkesubstratkapsel beabstandet hiervon positioniert werden kann und trotzdem eine korrekte Ausrichtung der Getränkesubstratkapsel zu einem weiteren, insbesondere feststehenden Injektionskammerteil sichergestellt ist sowie eine ausreichende bzw. sichere Verriegelung der alternativ als offene oder geschlossene Injektionskammer ausgebildeten Injektionskammer.

Aus der EP 0 654 528 D1 ist eine Getränkezubereitungsvorrichtung bekannt, bei der zwei Injektionskammerteile zum Schließen der Injektionskammer durch eine komplexe Hebelmimik relativ zueinander verstellbar sind. Dabei wird der Hebel um eine sich senkrecht zu einer Verstellachse eines der Injektionskammerteile verlaufenden Rotations- bzw. Schwenkachse verschwenkt.

Aus der WO 2015/084199 A1 ist eine Getränkezubereitungsvorrichtung zum Herstellen von Getränken aus Getränkesubstratkapseln bekannt, wobei ein erstes Injektionskammerteil translatorisch relativ zu einem ortsfesten zweiten Injektionskammerteil zum Öffnen und Schließen einer Injektionskammer entlang einer Verstellachse verstellbar ist. Dem ersten Injektionskammerteil sind Betätigungsmittel umfassende Verriegelungs- und Vorschubmittel zugeordnet.

Die WO 2013/153526 A1 beschreibt einen Kapseladapter für Getränkesubstratkapseln, welcher in eine Injektionskammer einsetzbar ist. Ein Deckel des Adapters ist dabei lösbar an einer Kapselaufnahme angeordnet.

Die EP 2 218 370 A2 beschreibt eine Kapselmaschine, bei der ein erstes Injektionskammerteil durch Umlegen eines Schwenkhebels zwischen einer Offen- und einer Geschlossenposition relativ zu einem ortsfesten zweiten Injektionskammerteil verstellbar ist.

Zum Weiteren Stand der Technik werden die WO 2014/096 122 A1, die DE 60311772 T2, die EP 2 205 123 B1, die WO 2014/132158 A1 sowie die EP 2 687 133 A1 genannt.

Ausgehend von dem vorgenannten Stand der Technik liegt daher der Erfindung die Aufgabe zugrunde, eine Getränkezubereitungsvorrichtung, insbesondere Kapselmaschine anzugeben, bei der die Getränkesubstratkapsel nicht in einem feststehenden Injektionskammerbauteil positioniert werden muss, sondern mit Abstand zu diesem positionierbar ist und trotzdem eine komfortable Handhabung bzw. Beladung der Getränkezubereitungsvorrichtung sowie eine sichere Verriegelung der Injektionskammer im geschlossenen Zustand, d.h. mit darin befindlicher Getränkesubstratkapsel sichergestellt ist. Ferner besteht die Aufgabe darin, ein optimiertes Betriebsverfahren für eine solche alternative Getränkezubereitungsvorrichtung anzugeben.

Diese Aufgabe wird hinsichtlich der Getränkezubereitungsvorrichtung mit den Merkmalen des Anspruchs 1 gelöst.

Hinsichtlich des Betriebsverfahrens wird die Aufgabe mit den Merkmalen des Anspruchs 14 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, dem ersten beweglichen bzw. in einer, insbesondere reinen, translatorischen Verstellbewegung entlang der Verstellachse verstellbaren, bevorzugt eine Getränkeauslassseite bildende, Injektionskammerteil eine Getränkekapselaufnahme zuzuordnen, wobei die von dem Injektionskammerteil gebildete oder an diesem angeordnete Getränkekapselaufnahme zusammen mit dem Injektionskammerteil verstellbar ist, so dass entlang der Verstellachse beabstandet zu dem zweiten, vorzugsweise ortsfesten, bevorzugt als Wassereinleitseite ausgebildete Injektionskammerteil bei geöffneter Injektionskammer bzw. bei sich in der Beladeposition befindlichem ersten Injektionskammerteil in die Getränkekapselaufnahme des ersten Injektionskammerteils eine Getränkesubstratkapsel eingelegt werden kann, die dann zusammen mit der bzw. in der Getränkekapselaufnahme mit dem ersten Injektionskammerteil entlang der Verstellachse in Richtung auf das zweite Injektionskammerteil zu bis in eine Zwischenposition verstellbar ist, wobei weiter vorgesehen ist, dass eine Endphase der Schließbewegung der Injektionskammer, bevorzugt ausschließlich die Endphase der Schließbewegung, nicht einfach durch axiales bzw. translatorisches Schieben des ersten Injektionskammerteils weiter in Richtung des zweiten Injektionskammerteils realisiert ist, sondern dass die Endphase der Schließbewegung, d.h. das translatorische Verstellen des ersten Injektionskammerteils zusammen mit der Getränkeaufnahme von der Zwischenposition in eine weiter in Richtung des zweiten Injektionskammerteils entlang der Verstellachse versetzten Endposition aus einer, insbesondere manuell oder alternativ elektromotorisch aktuierten, Rotationsbewegung von Betätigungsmitteln von Verriegelungs- und Vorschubmitteln resultiert, die also eine Rotationsbewegung in eine translatorische End-Verstellbewegung des ersten Injektionskammerteils entlang der Verstellachse umwandeln. Zudem wird das erste Injektionskammerteil in seiner Endposition durch die Rotationsbewegung der Betätigungsmittel um die Rotationsachse, die erfindungsgemäß mit der Verstellachse zusammenfällt, derart blockiert bzw. verriegelt, dass das erste Injektionskammerteil nicht mehr durch eine reine Zugkraftbeaufschlagung entlang der Verstellachse aus der Endposition in Richtung Zwischen- oder Beladeposition herausbewegt werden kann, sondern das Entriegeln muss durch Zurückverdrehen der Betätigungsmittel bewirkt werden.

Insgesamt sind die Betätigungsmittel zusammen mit dem ersten Injektionskammerteil und seiner Getränkekapselaufnahme zwischen der Beladeposition und der Endposition verstellbar, wobei auf diesem Verstellweg die Betätigungsmittel in einem Bereich zwischen der Zwischenposition und der Endposition um eine vorzugsweise mit der Verstellachse zusammenfallende Rotationsachse rotierbar sind.

Bei der erfindungsgemäßen Getränkezubereitungsvorrichtung ist also vorgesehen, dass eine Getränkesubstratkapsel an einem verstellbaren Injektionskammerteil, genauer an einer Getränkekapselaufnahme des ersten Injektionskammerteils in einer Beladeposition angeordnet werden kann, woraufhin das erste Injektionskammerteil mit der Getränkekapselaufnahme und darin angeordneter Getränkesubstratkapsel entlang der Verstellachse, insbesondere ausschließlich durch Aufbringen einer Druckkraft rein translatorisch entlang der Verstellachse in eine Zwischenposition in Richtung des zweiten Injektionskammerteils verschoben wird und daraufhin in einer End-Schließphase eine weitere translatorische Verstellbewegung des Injektionskammerteils durch Verdrehen bzw. Rotieren von Betätigungsmitteln bewirkt wird, deren Rotationsbewegung um die Verstellachse, in die restliche translatorische Verstellbewegung des ersten Injektionskammerteils umgewandelt werden und durch deren Rotation das erste Injektionskammerteil in seiner Endposition gegen ein Herausziehen bzw. Zurückziehen in Richtung der Beladeposition blockiert werden, dass also die Injektionskammer verriegelt bzw. gesichert wird und somit beim Injektionsvorgang nur durch die wirkenden Druckkräfte oder nur durch das Aufbringen einer Zugkraft nicht rein translatorisch geöffnet werden kann - für das Öffnen ist bevorzugt ein Zurückverdrehen der Betätigungsmittel notwendig.

Bei der erfindungsgemäßen Getränkezubereitungsvorrichtung fallen also eine Beladeposition und die Endposition mit dazwischen entlang der Verstellachse angeordneter Zwischenposition (deutlich) auseinander und trotzdem wird eine komfortable Handhabung der Getränkezubereitungsvorrichtung sowie ein einfacher Verriegelungsmechanismus der Injektionskammer sichergestellt. Bevorzugt ist es, wenn der letzte Verstellweg der Schließbewegung, also der Abstand von der Zwischenposition in die Endposition entlang der Verstellachse kürzer ist, bevorzugt deutlich kürzer ist, als der Verstellweg von der Beladeposition in die Zwischenposition, wobei es besonders bevorzugt ist, wenn der letztgenannte (erste) Verstellweg bzw. Schließweg mindestens der Axialerstreckung der Getränkesubstratkapsel entlang der Verstellachse entspricht und bevorzugt größer ist als diese Axialerstreckung, um ein komfortables Einlegen der Getränkesubstratkapsel, vorzugsweise senkrecht zur Längserstreckung der Verstellachse zu ermöglichen, während der weitere (zweite) Verstellweg bevorzugt kürzer ist als die Axialerstreckung der Kapsel entlang der Verstellachse, d.h. der Abstand zwischen den Kapselstirnseiten.

Im Hinblick auf die konkrete Ausbildung der Injektionskammer gibt es unterschiedliche Möglichkeiten. So ist es grundsätzlich möglich, die Injektionskammer als geschlossene Injektionskammer auszubilden, bei der in der Endposition die Getränkesubstratkapsel vollständig dicht umschlossen ist von dem ersten und dem zweiten Injektionskammerteil, die dann vollumfänglich unmittelbar gegeneinander abgedichtet sind. Alternativ und bevorzugt ist eine Ausführungsform der Injektionskammer als sogenannte offene Injektionskammer, bei der insbesondere nicht unmittelbar vollumfänglich das erste und das zweite Injektionskammerteil gegeneinander abgedichtet sind, sondern die beiden Injektionskammerteile, insbesondere stirnseitig gegen die Getränkesubstratkapsel abdichten, letztere also einen Bestandteil, also quasi ein Zwischenstück der Injektionskammer bildet. Zu diesem Zweck stützten sich dann vorzugsweise beide Injektionskammerteile über jeweils mindestens eine Elastomerdichtung, bevorzugt jeweils stirnseitig, an der Kapsel ab. Auch bei der zuletzt erläuterten, offenen Injektionskammer ist es bevorzugt, wenn die Injektionskammerteile abschnittsweise, nämlich in einem unteren und bevorzugt in einem seitlichen Bereich aneinander anliegen, um bei einem Spülvorgang einen unkontrollierten Wasseraustritt nach unten aus einem Bereich zwischen den Injektionskammerteilen hindurch zu vermeiden - eine offene Injektionskammer zeichnet sich jedenfalls dadurch aus, dass in der Schließposition der Injektionskammerteile diese nicht vollumfänglich gegeneinander abgedichtet sind, sondern, insbesondere auf der Oberseite eine Öffnung bzw. ein größerer Abstand verbleibt. Wesentlich ist, dass sich die Injektionskammerteile beide dichtend an der Getränkesubstratkapsel abdichten, die somit Bestandteil der Injektionskammer bildet.

Die erfindungsgemäße Getränkezubereitungsvorrichtung kann beispielsweise zur Herstellung von Kaltgetränken ausgebildet sein, wobei dann bevorzugt von den Wasserversorgungsmitteln kaltes bevorzugt mit integralen Kühlmitteln der Getränkezubereitungsvorrichtung gekühltes oder alternativ Umgebungstemperatur aufweisendes Wasser in die Getränkesubstratkapsel injiziert wird. Besonders bevorzugt ist es, wenn die Getränkezubereitungsvorrichtung zur Herstellung von Heißgetränken, insbesondere Kaffee ausgebildet ist, wobei dann bevorzugt heißes bevorzugt mit Heizmitteln der Getränkezubereitungsvorrichtung erwärmtes Wasser von den Wasserversorgungsmitteln in die Getränkesubstratkapsel einleitbar ist und somit dort ein Substrat aufgelöst und/oder ausgelaugt werden kann. Bevorzugt handelt es sich bei dem Substrat um Kaffeebohnenpulver, welches durch Injektion von heißem Wasser ausgelaugt wird.

Im Hinblick auf die Wasserversorgungsmittel gibt es unterschiedliche Möglichkeiten. Zumindest für den Fall, was bevorzugt ist, dass die Getränkezubereitungsvorrichtung einen eigenen Wasservorrat, insbesondere Wassertank aufweist, umfassen die Wasserversorgungsmittel bevorzugt eine Pumpe, um das Wasser unter definiertem Druck zur Injektionskammer, insbesondere zum zweiten Injektionskammerteil zu fördern. Zusätzlich oder alternativ können die Wasserversorgungsmittel einen Frischwasseranschluss aufweisen, bevorzugt in Kombination mit einer Pumpe. Für den Fall der Ausbildung der Getränkezubereitungsvorrichtung als Kaffeemaschine zur Herstellung von Kaffee handelt es sich bei der Injektionskammer bevorzugt um eine sogenannte Brühkammer und bei den Injektionskammerteilen um Brühkammerteile, wobei es besonders bevorzugt ist, wenn zur Zubereitung von Heißgetränken in den Wasserversorgungskreis Heizmittel zum Erhitzen des Wassers integriert sind.

Grundsätzlich ist es möglich, den Betätigungsmitteln und/oder der Injektionskammer Sensormittel zuzuordnen, mit denen detektierbar ist, ob sich das erste Injektionskammerteil in der Endposition befindet und/oder ob die Injektionskammer verriegelt ist, wobei solche Sensormittel bevorzugt mit einer Steuereinrichtung signalleitend verbunden sind, die einen Getränkebezugsprozess bevorzugt erst unter der Bedingung startet oder freigibt, dass von den Sensormitteln ein entsprechendes Signal, insbesondere Positions-Signal erhalten wird.

Wie erläutert, wird unter der Verriegelung der Injektionskammer verstanden, dass diese gegen eine rein translatorische Verstellbewegung durch Zugkraftbeaufschlagung des ersten Injektionskammerteils von außen und/oder durch Druckkraftbeaufschlagung des ersten Injektionskammerteils in Richtung Beladeposition durch Wasserinjektion in die Getränkesubstratkapsel gesichert bzw. verriegelt ist. Um eine solche translatorische Verstellbewegung zu ermöglichen bzw. um das erste Injektionskammerteil zurück in die Beladeposition verstellen zu können, muss zunächst die Injektionskammer entriegelt werden, bevorzugt durch Rotieren der Betätigungsmittel, insbesondere in eine Ausgangsposition.

Bei dem letzten Bewegungsabschnitt des Injektionskammerteils zum Schließen der Injektionskammer, d.h. bei der durch Rotieren der Betätigungsmittel aktuierten translatorischen Verstellbewegung erfolgt ein Öffnen der Getränkesubstratkapsel, insbesondere auf zwei gegenüberliegenden Seiten und eine Dichtungspressung, insbesondere von Dichtungen zur Abdichtung der Getränkesubstratkapsel gegenüber den Injektionskammerteilen (offene Injektionskammer) oder mindestens einer Dichtung zur Abdichtung des ersten und des zweiten Injektionskammerteils gegeneinander. Ganz besonders bevorzugt ist es, wenn der Bewegungsablauf zum Schließen der Injektionskammer so abgestimmt ist, dass zuerst das Öffnen der Kapseln erfolgt, daraufhin die endgültige Dichtungspressung und bevorzugt in einem dritten Schritt eine akustische und/oder haptische Rückmeldung des Erreichens der Endposition erfolgt, insbesondere dadurch, dass die, wie später noch erläutert werden wird, eine Rotationshülse umfassenden Betätigungsmittel mit entsprechenden Haptikmitteln, insbesondere Federn- bzw. Rastmitteln in einer Endrotationsposition zusammenwirken.

Zur Umwandlung der Rotationsbewegung der Betätigungsmittel um die Rotationsachse und damit erfindungsgemäß um die Verstellachse, in die translatorische Endverstellbewegung des ersten Injektionskammerteils aus der Zwischenposition in die Endposition und/oder in die entgegengesetzte Richtung von der Endposition in die Zwischenposition ist erfindungsgemäß ein bevorzugt ortsfestes Widerlager vorgesehen, relativ zu dem das erste Injektionskammerteil (und zur Getränkekapselaufnahme) bei seiner translatorischen Verstellbewegung verstellbar ist, wobei das Widerlager derart relativ zu den Betätigungsmitteln angeordnet ist, welche bevorzugt gemeinsam mit dem ersten Injektionskammerteil von der Beladeposition bis zu dessen Endposition entlang der Verstellachse verstellbar ist, dass die Betätigungsmittel in der Zwischenposition des ersten Injektionskammerteils das Widerlager entlang der Verstellachse ausgehend von einer von dem zweiten Injektionskammerteil abgewandten Außenseite des Widerlagers bis zu einer dem zweiten Injektionskammerteil zugewandten Innenseite des Widerlagers abschnittsweise oder vollständig durch- und/oder umgreifen, und dass sich die Verriegelungs- und/oder Vorschubmittel über einen, bevorzugt drehfest mit den Betätigungsmitteln verbundenen oder einteilig mit diesen ausgebildeten, eine Abstützfläche auweisenden Abstützabschnitt durch Rotieren der Betätigungsmittel nach Erreichen der Zwischenposition (ausgehend von der Beladeposition) axial auf der Innenseite des Widerlagers über und/an mindestens einer Schrägfläche derart abstützen, dass die Rotationsbewegung der Betätigungsmittel in die translatorische Verstellbewegung des ersten Injektionskammerteils (gemeinsam mit den Betätigungsmitteln und der Getränkekapselaufnahme) von der Zwischenposition in die Endposition umwandelbar ist. Anders ausgedrückt erstrecken sich die Betätigungsmittel unmittelbar von einer von dem zweiten Injektionskammerteil abgewandten Seite eines bevorzugt ortsfesten Widerlagers entlang der Verstellachse bis auf die der Injektionskammer zugewandte Seite (Innenseite) des Widerlagers und stützen sich über einen an den Betätigungsmitteln, bevorzugt drehfest, fixierten oder einteilig mit diesen ausgebildeten, insbesondere an einem Wechselwirkungselement angeordneten Abstützabschnitt auf der Innenseite des Widerlagers bei einer Rotationsbewegung ab, derart, dass die Rotationsbewegung der Betätigungsmittel in die translatorische End-Verstellbewegung des ersten Injektionskammerteils von der Zwischenposition in die Endposition entlang der Verstellachse umgewandelt wird. Zur Umwandlung dieser Rotationsbewegung in die translatorische Verstellbewegung ist es notwendig, dass der Abstützabschnitt und/oder die Innenseite des Widerlagers eine Schrägfläche aufweist entlang derer bei einer Rotationsbewegung der Betätigungsmittel der Abstützabschnitt axial entlang der Verstellachse in Richtung des zweiten Injektionskammerteils wandert und damit das erste Injektionskammerteil in die Endposition verstellt. Besonders zweckmäßig ist es, wenn mindestens ein Schrägflächenpaar, vorzugsweise zwei in Umfangsrichtung beabstandete Schrägflächenpaare vorgesehen ist/sind, umfassend eine am Abstützabschnitt vorgesehene Schrägfläche und eine korrespondierende Schrägfläche ab Widerlager.

Die Wechselwirkung zwischen einem vorerwähnten Widerlager und den Betätigungsmitteln, insbesondere einem Abstützabschnitt der Betätigungsmittel kann alternativ in der Art einer Gewindeverbindung realisiert sein, also derart, dass an den Betätigungsmitteln, insbesondere dem bevorzugt an einem Wechselwirkungselement angeordneten Abstützabschnitt ausgebildetes erstes Gewinde, insbesondere ein Außengewinde, durch Rotieren der Betätigungsmittel nach Erreichen der Zwischenposition des ersten Injektionskammerteils mit einem an dem Widerlager ausgebildeten Gegengewinde, insbesondere einem Innengewinde, derart zusammenwirkt, dass die Rotationsbewegung der Betätigungsmittel um die Rotationsachse und damit erfindungsgemäß um die Verstellachse, aufgrund der Gewindesteigung in die gewünschte, insbesondere rein, translatorische End-Verstellbewegung des ersten Injektionskammerteils von der Zwischenposition in die Endposition umgewandelt wird.

Wie eingangs erwähnt ist es besonders bevorzugt, wenn der translatorische Verstellweg des ersten Injektionskammerteils von der Beladeposition in die Zwischenposition um ein Vielfaches größer ist als der translatorische Verstellweg des ersten Injektionskammerteils von der Zwischenposition in die Endposition, und dass die Zwischenposition so relativ zu, bevorzugt als Aufstechmittel ausgebildeten Öffnungsmitteln der Getränkezubereitungsvorrichtung positioniert ist, dass eine in der Getränkekapselaufnahme aufgenommene Getränkesubstratkapsel erst bei der translatorischen Verstellbewegung von der Zwischenposition in die Endposition (und nicht bereits bei der Verstellung von der Beladeposition in die Zwischenposition) auf mindestens einer Stirnseite, insbesondere auf beiden voneinander abgewandten Stirnseiten der Getränkesubstratkapsel zur Injektion von Wasser und zum Ausleiten des fertigen Getränks öffenbar ist. Dabei ist es besonders zweckmäßig, wenn der Verstellweg von der Beladeposition in die Zwischenposition mindestens der Axialerstreckung der Getränkesubstratkapsel entlang der Verstellachse entspricht und vorzugsweise größer ist als dieser, während bevorzugt der Verstellweg von der Zwischenposition in die Endposition weniger als 10mm, vorzugsweise weniger als 5mm beträgt und insbesondere so gewählt ist, dass im Wesentlichen der Weg ausreicht die Getränkesubstratkapsel zu öffnen, insbesondere aufzustechen und eine Injektionskammerdichtung zu pressen.

Um Fehlbedienungen zu vermeiden ist in Weiterbildung der Erfindung mit Vorteil vorgesehen, dass eine Rotierbarkeit der Betätigungsmittel während der, insbesondere gesamten, translatorischen Verstellbewegung des ersten Injektionskammerteils der Position bis zur Zwischenposition blockiert ist. Dies kann mit Vorteil dadurch erreicht werden, dass sich die Betätigungsmittel zum Blockieren von deren Rotierbarkeit während der translatorischen Verstellbewegung bis zum Erreichen der Zwischenposition in Umfangsrichtung an dem Widerlager abstützen, insbesondere innerhalb mindestens einer Durchgriffsöffnung des Widerlagers, die bevorzugt von den Betätigungsmitteln entlang der Verstellachse durchsetzt ist.

Insbesondere um durch eine Zugkraftbeaufschlagung der Betätigungsmittel ein Zurückverstellen des ersten Injektionskammerteils entlang der Verstellachse in die Beladeposition zu ermöglichen, ist in Weiterbildung der Erfindung mit Vorteil vorgesehen, dass die Betätigungsmittel mechanisch mit dem ersten Injektionskammerbauteil zur Übertragung von Zugkräften gekoppelt sind. Dies kann beispielsweise dadurch realisiert werden, dass die Betätigungsmittel rotierbar an einem später noch zu erläuternden Rahmen angeordnet und in axialer Richtung an diesem gesichert sind und zugleich das erste Injektionskammerteil an diesem Rahmen festgelegt ist, so dass durch Zugkraftbeaufschlagung und/oder Druckkraftbeaufschlagung der Betätigungsmittel der Rahmen mit samt Injektionskammerteil entlang der Verstellachse verstellbar ist. Bevorzugt handelt es sich um einen Rahmen mit einer zumindest näherungsweise zylindrischen Hüllkontur.

Erfindungsgemäß ist vorgesehen, dass das erste Injektionskammerteil bei seiner translatorischen Verstellbewegung entlang eines Führungsrahmens verstellbar ist, der zwei, vorzugsweise parallele Führungsarme aufweist, insbesondere in der Art einer Gabel, wobei das Widerlager als Verbindungselement zwischen den Führungsarmen ausgebildet und angeordnet ist, insbesondere beabstandet zu einem die Führungsarme einteilig verbindenden bzw. ausbildenden Verbindungsabschnitt. Dabei ist es besonders zweckmäßig, wenn das Widerlager erst bei der Montage an den Führungsarmen festgelegt wird, insbesondere formschlüssig und nicht einteilig mit diesen ausgebildet ist, um auf diese Weise die Arme exakt relativ zueinander zu positionieren. Mit anderen Worten, kann auf diese Weise über das Widerlager ein Toleranzausgleich realisiert werden, so dass die Führungsarme durch Montage des Widerlagers exakt zueinander beabstandet werden. Bevorzugt werden die Arme dabei elastisch, in Richtung nach außen bezogen auf die Verstellachse verstellt bzw. aufgeweitet, so dass der Abstand der Führungsarme toleranztechnisch auf Untermaß ausgelegt werden kann und die korrekte Beabstandung durch elastisches Verspannen des Widerlagers möglich ist.

Wie bereits erwähnt ist es besonders bevorzugt, wenn das erste Injektionskammerteil, insbesondere zur mechanischen Kopplung mit den Betätigungsmitteln an einem Rahmen angeordnet, insbesondere festgelegt ist, der bei der translatorischen Verstellbewegung des ersten Injektionskammerteils an den Führungsarmen geführt ist, wobei es grundsätzlich möglich ist, dass die Führungsarme den Rahmen an dessen Außenumfang führen. Besonders zweckmäßig ist es jedoch, wenn die Führungsarme axial, d.h. entlang der Verstellachse in den Rahmen eingreifen, d.h. in diesem angeordnet sind und somit der das Injektionskammerteil aufweisende Rahmen an seinem inneren Umfang geführt ist.

Zweckmäßig ist es nun, wenn die Betätigungsmittel ein, vorzugsweise einen endseitigen Hülsenboden aufweisendes, bevorzugt kreiszylindrisch konturiertes, weiter bevorzugt eine außenumfängliche Grifffläche zum manuellen Betätigen aufweisendes Hülsenelement aufweisen, welches bevorzugt entlang der Verstellachse des Widerlagers außen in Richtung der Verstellachse übergreift, wobei das Hülsenelement bevorzugt nach radial innen in eine außenumfängliche Nut des Rahmens eingreift, um das Hülsenelement zur Übertragung von Zug- und/oder Druckkräften mechanisch mit dem Rahmen und somit mit dem ersten Injektionskammerteil und dessen Kapselaufnahme zu koppeln und trotzdem noch relativ zu dem Rahmen, insbesondere ab Erreichen der Zwischenposition verdreht werden zu können.

Besonders zweckmäßig ist es, wenn in der Mantelfläche des vorerwähnten Hülsenelements eine sich in Umfangsrichtung erstreckende, bevorzugt umfangsgeschlossene, insbesondere schlitzartige Öffnung für einen Getränkeauslass angeordnet ist, welcher bevorzugt an dem ersten Injektionskammerteil angeordnet ist, wobei die Öffnung von dem Getränkeauslass in radialer Richtung nach außen durchsetzt ist und/oder von einem durch den Getränkeauslass strömenden Getränk in radialer Richtung nach außen durchströmbar ist. Hierdurch kann insgesamt die Länge der Getränkezubereitungsvorrichtung entlang der Verstellachse sowie senkrecht zur Verstellachse verkürzt werden.

Besonders zweckmäßig ist es, wenn die Rotationsbewegung der Betätigungsmittel begrenzt ist, d.h. dass die Betätigungsmittel nur über einen begrenzten (definierten) Umfangswinkel, von vorzugsweise weniger als 180°, noch weiter bevorzugt weniger als 120°, ganz besonders bevorzugt zwischen 60° und 100°, insbesondere von 90°, in Umfangsrichtung um die, vorzugsweise mit der Verstellachse zusammenfallende Rotationsachse rotierbar sind, um das erste Injektionskammerteil von der Zwischenposition in die Endposition zu verstellen und die Injektionskammer zu verriegeln. Im Hinblick auf die Anordnung entsprechender Anschläge gibt es unterschiedliche Möglichkeiten - besonders bevorzugt ist es, wenn die Rotationsbewegung durch eine Anschlagswechselwirkung zwischen den Betätigungsmitteln, insbesondere einem vorerwähnten Hülsenelement und dem vorerwähnten Rahmen zur Führung des ersten Injektionskammerbauteils entlang des Führungsrahmens realisiert ist.

Besonders bevorzugt ist es, wenn den Betätigungsmitteln Haptikrückkopplungsmittel zugeordnet sind, die derart ausgebildet sind, dass sie dem Nutzer spürbar das Erreichen mindestens einer bestimmten Drehposition der Betätigungsmittel rückkoppeln, insbesondere das Erreichen einer Drehendposition, die zumindest näherungsweise mit der Endposition des ersten Injektionskammerteils korreliert und/oder einer Öffnungsposition, die bevorzugt, jedoch nicht zwingend mit der Zwischenposition des ersten Injektionskammerteils korreliert. Ganz besonders bevorzugt ist es, wenn solche Haptikrückkopplungsmittel zusätzlich zu die Rotationsbewegung der Betätigungsmittel begrenzenden Anschlägen vorgesehen sind, insbesondere derart, dass die haptische bzw. spürbare Rückkopplung kurz vor, insbesondere unmittelbar vor Erreichen bzw. Anschlagen an einem solchen Anschlag erfolgt. Als besonders vorteilhaft hat es sich herausgestellt, wenn die Haptikrückkopplungsmittel derart ausgebildet sind, dass die Drehposition der Betätigungsmittel, insbesondere des Hülsenelementes der Betätigungsmittel rückkoppeln. Hierzu kann gemäß einer besonders bevorzugten Ausführungsform am Hülsenelement, insbesondere an einer Innenmantelfläche des Hülsenelementes ein erstes Rastelement vorgesehen sein, das mit einem, vorzugsweise stirnseitig am Rahmen angeordneten Gegenrastelement zusammenwirkt, insbesondere derart, dass das hülsenseitige Rastelement mit einer stirnseitigen Vertiefung und/oder einem stirnseitigen Vorsprung des Rahmens zusammenwirkt und mit diesem verrastet, insbesondere nach vorherigem Gleiten über eine entsprechende Rampe. Bevorzugt wird das zur Realisierung der axialen Relativbewegung zwischen Hülsenelement und Rahmen benötigte Axialspiel durch entsprechende Dichtungsdimensionierungen von Dichtungen der Getränkezubereitungsvorrichtung realisiert, die beim Rastvorgang, insbesondere beim Entlanggleiten des hülsenelementseitigen Rastelementes an einer Anlaufschräge des Gegenrastelementes weiter axial gepresst werden. Besonders zweckmäßig ist es, wenn jeder End-Rotationsposition ein hülsenelementseitiges Rastelement zugeordnet ist, das wiederum mit einem jeweiligen Gegenrastelement, vorzugsweise des Rahmens, insbesondere in vorgenannter Weise zur Realisierung der haptischen Rückkopplung zusammenwirkt.

Wie eingangs erwähnt ist es grundsätzlich möglich, die Injektionskammer als in der Endposition des ersten Injektionskammerteils geschlossene Injektionskammer auszubilden, d.h. eine Injektionskammer, die die Getränkesubstratkapsel vollumfänglich umschließt und bei der die Injektionskammerbauteile gegeneinander in der Endposition abgedichtet sind. Besonders bevorzugt ist jedoch eine Ausführungsform der Getränkezubereitungsvorrichtung, bei der die Injektionskammer als im geschlossenen Zustand "offene" Injektionskammer ausgebildet ist, bei der sich das erste und das zweite Injektionskammerteil, vorzugsweise über jeweils mindestens eine Dichtung entlang der Verstellachse an der Getränkesubstratkapsel abstützen, die somit die Injektionskammerbauteile entlang der Verstellachse beabstandet. Anders ausgedrückt ist bei einer solchen Ausführungsform die Getränkesubstratkapsel klemmend zwischen den bevorzugt beabstandeten Injektionskammerbauteilen aufgenommen und die Getränkesubstratkapsel bildet somit einen Bestandteil der Injektionskammer. Bevorzugt ist die Getränkesubstratkapsel hier entsprechend steif ausgebildet und weist eine entsprechende Wandstärke auf.

Als besonders vorteilhaft hat es sich herausgestellt, wenn die Wasserversorgungsmittel an das zweite Injektionskammerteil angeschlossen sind, d.h. dass in die geschlossene Injektionskammer von dem zweiten Injektionskammerteil her Wasser injiziert wird und/oder dass das erste Injektionskammerbauteil einen zusammen mit diesem verstellbaren Auslauf für das fertige Getränk aufweist, welcher bevorzugt, wie zuvor erläutert das Getränk in radialer Richtung durch die Betätigungsmittel, insbesondere ein Hülsenelement, ausleitet.

Die Erfindung führt auch auf ein Verfahren zum Betreiben einer nach dem Konzept der Erfindung ausgebildeten Getränkezubereitungsvorrichtung, wobei zunächst eine Getränkesubstratkapsel in die Getränkekapselaufnahme des ersten Injektionskammerbauteils bei in der Beladeposition befindlichem ersten Injektionskammerbauteil eingelegt wird, woraufhin das erste Injektionskammerteil, insbesondere durch Verschieben bzw. Axialkraftbeaufschlagung der Betätigungsmittel von der Beladeposition entlang der Verstellachse in die Zwischenposition, vorzugsweise rein translatorisch verstellt wird, woraufhin (nach Erreichen der Zwischenposition) die Injektionskammer geschlossen wird, und zwar durch Rotieren der Betätigungsmittel um eine erfindungsgemäß mit der Verstellachse zusammenfallende, d.h. von dieser gebildeten Rotationsachse, wobei die Rotationsbewegung der Betätigungsmittel in eine translatorische Verstellbewegung des Injektionskammerteils zusammen mit seiner Getränkekapselaufnahme und den Betätigungsmitteln in die Endposition erfolgt und zudem die Injektionskammer verriegelt wird, d.h. gegen ein Öffnen durch reine Axialkraftbeaufschlagung entlang der Verstellachse gesichert wird. Zum Entsichern ist ein erneutes bzw. weiteres Verdrehen der Betätigungsmittel, vorzugsweise in die Ursprungsposition notwendig.

Besonders zweckmäßig ist es, wenn durch das Rotieren der Betätigungsmittel und der daraus resultierenden translatorischen Verstellbewegung des ersten Injektionskammerteils entlang der Verstellachse in Richtung des zweiten Injektionskammerteils eine in der Getränkeaufnahme angeordnete Kapsel entlang der Verstellachse zwischen dem ersten und dem zweiten Injektionskammerteil geklemmt wird und entsprechende Dichtungen gepresst werden. Bevorzugt wird das Erreichen der Verriegelungsposition akustisch und/oder haptisch signalisiert, insbesondere durch Wechselwirkung der Betätigungsmittel mit Haptikmitteln, insbesondere Rast- oder Federmitteln, die bevorzugt an einem wie zuvor beschrieben erläuterten Rahmen angeordnet sind, der das erste Injektionskammerteil hält.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 bis 6:: unterschiedliche, teilweise geschnittener Darstellungen von einer Injektionseinheit einer Getränkezubereitungsvorrichtung sowie Darstellungen,
- Fig. 7 bis 16:: eine schematische Darstellung der Funktionsweise der Getränkezubereitungsvorrichtung anhand von schematisierten Zustandsdarstellungen, und
- Fig. 17 und 18:: zwei weitere Detaildarstellungen der Injektionseinheit gemäß den Fig. 1 bis 6 zur Erläuterung der Funktionsweise von vorzugsweise vorgesehenen Haptikrückkopplungsmitteln.

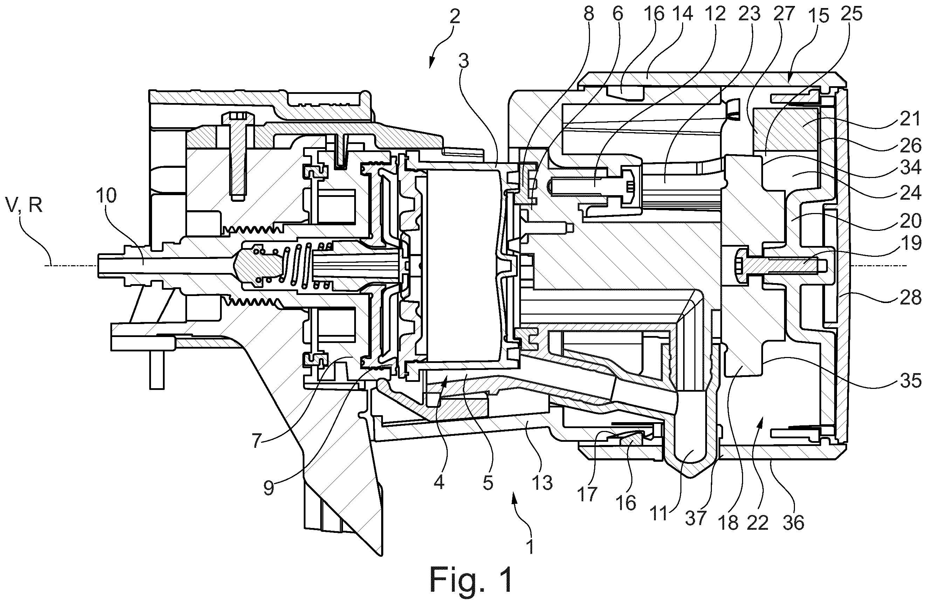

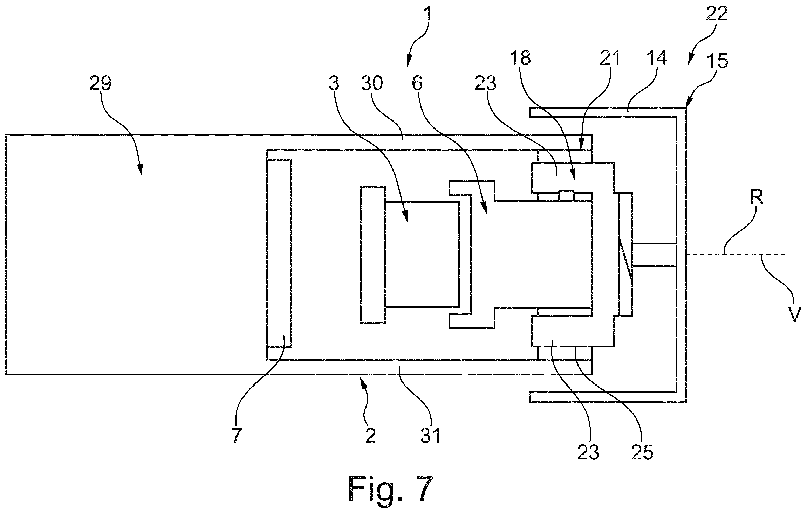

In den Figuren sind gleiche Bauteile und Bauteile mit der gleichen Funktion mit den gleichen Bezugszeichen gekennzeichnet.
Zunächst wird anhand der Fig. 1 bis 6 der Aufbau eines bevorzugten Ausführungsbeispiels einer Getränkezubereitungsvorrichtung erläutert und daraufhin anhand der Figuren 7 bis 16 deren Funktionsweise.

In Fig. 1 ist ausschnittsweise eine Getränkezubereitungsvorrichtung 1 gezeigt. Zu erkennen ist eine hier als Brüheinheit ausgebildete Injektionseinheit 2 zum Injizieren von Wasser in eine Getränkesubstratkapsel 3, welche in der Darstellung gemäß Fig. 1 in einer als sogenannte offene bzw. über die Getränkesubstratkapsel 3 selbst geschlossenen Injektionskammer 4 aufgenommen, konkret axial geklemmt ist.

Die Getränkesubstratkapsel 3 befindet sich in einer bzw. liegt auf auf einer Getränkekapselaufnahme 5 eines ersten Injektionskammerteils 6, welches relativ zu einem ortfesten zweiten Injektionskammerteil 7 entlang einer Verstellachse V translatorisch verstellbar ist, und zwar zwischen einer Beladeposition, über eine Zwischenposition und der gezeigten Endposition, in der die Injektionskammer 4 geschlossen ist und in dem konkreten Ausführungsbeispiel das erste Injektionskammerteil 6 über eine Elastomerdichtung 8 dichtend an einer in der Zeichnungsebene rechten Stirnseite der Getränkesubstratkapsel 3 und gegenüberliegend das zweite Injektionskammerteil 7 über eine weitere bzw. zweite Elastomerdichtung 9 stirnseitig an der Getränkesubstratkapsel 3 anliegt.

Dem zweiten Injektionskammerteil 7 sind nicht im Detail gezeigte Wasserversorgungsmittel zugeordnet, mit denen kaltes oder von nicht gezeigten Heizmitteln erhitztes Wasser über eine Zuführleitung 10 zugeführt werden kann und über diesen Weg bei geschlossener Injektionskammer 4 ausgehend von dem zweiten Injektionskammerteil 7 in die Getränkesubstratkapsel 3 injiziert werden kann.

Dem ersten Injektionskammerteil 7 ist ein Auslass 11 zugeordnet, über den das fertige Getränk in ein Getränkebehältnis ausgeleitet werden kann.

Um das Injizieren von Wasser einerseits und das Ausleiten von Wasser andererseits in bzw. aus der Getränkesubstratkapsel 5 zu ermöglichen, ist die Getränkesubstratkapsel 5 an beiden Stirnseiten (nicht gezeigt) geöffnet, und zwar über integrale Öffnungsmittel der Getränkezubereitungsvorrichtung 1.

Das erste Injektionskammerteil 6 ist hier beispielhaft über eine Schraube 12 fixiert an einem Rahmen 13, der zusammen mit dem ersten Injektionskammerteil 6 und der Getränkekapselaufnahme 5 translatorisch verstellbar ist.

In den Rahmen 13 greift von radial außen nach radial innen ein Hülsenelement 14 von zu Verriegelungs- und Vorschubmittel 33 gehörenden Betätigungsmitteln 15 ein, und zwar über Radialfortsätze 16, die in eine nach außen offene Umfangsnut 17 des Rahmens 13 hineinragen. Auf diese Weise können von dem Hülsenelement 14 Druck- und Zugkräfte entlang der Verstellachse V in den Rahmen 13 und somit in das erste Injektionskammerteil 6 eingebracht werden.

Die Betätigungsmittel 15 der Verriegelungs- und Vorschubmittel 22 umfassen neben dem Hülsenelement 14 ein Wechselwirkungselement 18, welches in dem konkreten Ausführungsbeispiel über eine Zentralschraube 19 mit einem Hülsenboden 20 des Hülsenelementes 14 fest verbunden ist. Mit dem Wechselwirkungselement 18 durchgreifen die Betätigungsmittel 15 ein ortfestes Widerlager 21, an dem sich das Wechselwirkungselement 18 mit einer von dem zweiten Injektionskammerteil 7 abgewandten Abstützflächen 34, 35 bei in der Endposition befindlichem ersten Injektionskammerteil 6 abstützt.
Während der Verstellbewegung von der Beladeposition in die Zwischenposition verhindern Axialfortsätze 23 des Widerlagerelementes 18 ein Verdrehen des Wechselwirkungselementes 18 und damit des Hülsenelementes 14 bzw. der gesamten Betätigungsmittel 15 in Umfangsrichtung, indem sich die Axialfortsätze 23 in Umfangsrichtung am Innenumfang 24 einer Durchgriffsöffnung 25 im Widerlager 21 abstützen.

Insgesamt ist zu erkennen, dass die Betätigungsmittel 15, hier das Hülsenelement 14 das Widerlager 21 an seinem Außenumfang in axialer Richtung übergreift, und zwar von einer von dem zweiten Injektionskammerteil 7 abgewandten Außenseite 26 bis hin zu einer dem zweiten Injektionskammerteil 7 zugewandten Innenseite 27 bzw. sogar in Richtung der Verstellachse V darüber hinaus. Zusätzlich durchgreifen die Betätigungsmittel 15 das Widerlager 21 in einem inneren Bereich durch ein Zusammenspiel von Hülsenelement 14 und daran drehfest festgelegtem Wechselwirkungselement 18, genauer dessen eine Abstützfläche aufweisenden Abstützabschnitt.

Zu erkennen ist, dass in der Zeichnungsebene rechts das Hülsenelement 14 benachbart zum Hülsenboden 20 durch eine Dekorblende 28 verschlossen ist.

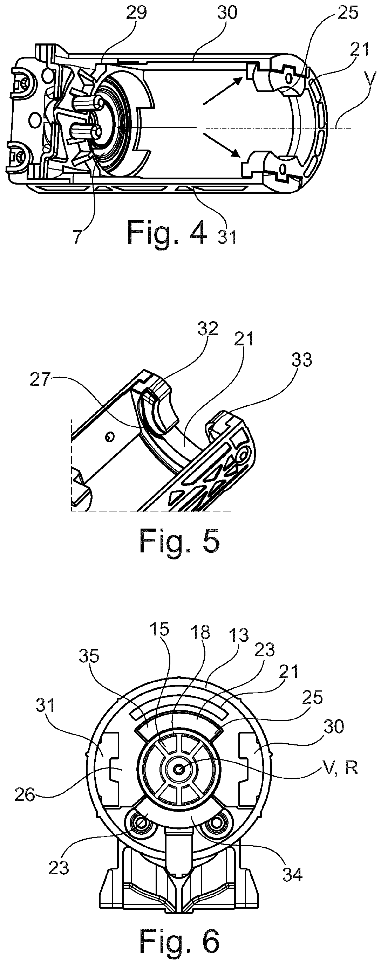

In Fig. 4 ist ein ortsfester Führungsrahmen 29 zu erkennen, mit an dem das zweite Injektionskammerteil 7 ausgebildet ist und der zwei parallele Führungsarme 30, 31 umfasst, die sich entlang der Verstellachse V erstrecken. Die Führungsarme 30, 31 sind beabstandet von dem zweiten Injektionskammerteil 7 senkrecht zur Verstellachse V bzw. miteinander verbunden über das Widerlager 21, welches die vorerwähnte Durchgriffsöffnung 25 aufweist. An diesem Widerlager 21, genauer an in Fig. 5 gezeigten Schrägflächen 32, 33 stützen sich die Betätigungsmittel 15 über korrespondierende, bevorzugt ebenfalls als Schrägflächen ausgebildete Abstützflächen 34, 35 des Abstützabschnitts des Wechselwirkungselements 18 ab.

Fig. 6 zeigt einen montierten Zustand. Zu erkennen ist, dass die Führungsarme 30, 31 in dem Rahmen 13 angeordnet sind und diesen an seinem Innenumfang führen. Zu erkennen ist weiterhin das Widerlager 21, welches durchsetzt ist von den Betätigungsmitteln 15, hier konkret dem Wechselwirkungselement 18. In der gezeigten Relativposition von Widerlager 21 und Wechselwirkungselement 18 ist nur eine translatorische Relativverstellbewegung zwischen den Betätigungsmitteln 15 und dem ortsfesten Widerlager 21 möglich, da eine Rotationsbewegung durch Anliegen der Axialfortsätze 23 in Umfangsrichtung am Innenumfang der Durchgriffsöffnung 25 unterbunden werden. Diese Rotationssicherung ist so gestaltet, dass eine Rotation der Betätigungsmittel 15 auf dem gesamten Verstellweg von der Beladeposition in die Zwischenposition unterbunden ist, und dass erst in der Zwischenposition die Betätigungsmittel 15, konkret das Wechselwirkungselement 18 soweit axial entlang der Verstellachse V durch das Widerlager 21 verschoben sind, dass die Axialfortsätze 23 die Rotationsbewegung nicht mehr blockieren und sich die Betätigungsmittel 15 über bevorzugt zumindest abschnittsweise schräge Abstützflächen 34, 35 an den korrespondierenden Schrägflächen 32, 33 des Widerlagers 21, und zwar auf dessen Innenseite 27 abstützen können.

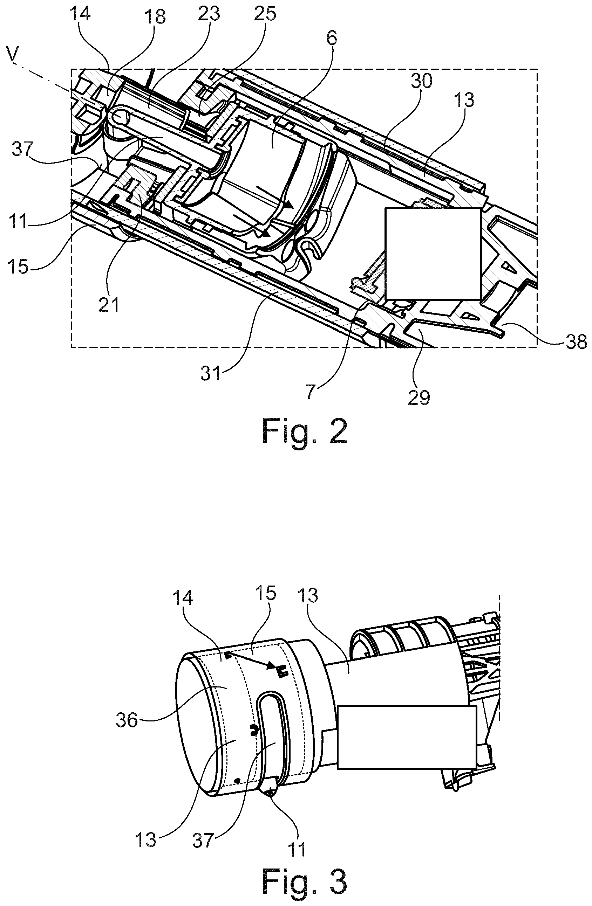

Fig. 3 zeigt das Hülsenelement 14 der Betätigungsmittel 15 in seiner Position auf dem Rahmen 13. Zu erkennen ist in einer Mantelfläche 36 eine hier umfangsgeschlossene und sich in Umfangsrichtung erstreckende, im Wesentlichen schlitzförmige Öffnung 37, die in radialer Richtung nach außen von einem Endabschnitt des Auslasses 11 durchsetzt ist, wie sich u.a. auch aus Fig. 1 ergibt.

In Fig. 2 ist eine Schnittansicht gezeigt, bei der sich das erste Injektionskammerteil 6 in einer Beladeposition befindet. Der Rahmen 13 ist an seinem Außenumfang an den Führungsarmen 30, 31 geführt. Das ortsfeste zweite Injektionskammerteil 7 ist am Führungsrahmen 29 angeordnet, der einen Verbindungsabschnitt 38 aufweist, der die Führungsarme einteilig miteinander verbindet. Es handelt sich bei der Kombination aus Verbindungsabschnitt 38 und Führungsarmen 30, 31 um ein Kunststoffspritzgussteil, wobei das Widerlager 21 klemmend sowie formschlüssig verbunden in einem Bereich der freien Enden der Führungsarme 30, 31 festgelegt ist. Gut zu erkennen ist, dass in der Beladeposition die Axialfortsätze 23 des Wechselwirkungselementes 18 axial in die Durchgriffsöffnung 25 des Widerlagers 21 eingreifen und somit eine Rotationsbewegung des Hülsenelementes 14 der Betätigungsmittel 15 unterbunden ist. Zu erkennen ist auch, dass der Auslauf 11 zunächst entlang der Verstellachse V axial in Richtung Hülsenelement 14 von dem zweiten Injektionskammerteil 7 weggeführt und dann nach radial außen umgelenkt ist durch die mantelseitige Öffnung 37 im Hülsenelement 14.

Anstatt des bajonettartigen Zusammenwirkens der Betätigungsmittel mit dem Widerlager, wie dies anhand der vorhergehenden Figuren erläutert wurde, ist es auch denkbar, dass das Widerlager und die Betätigungsmittel, wie im allgemeinen Beschreibungssteil erläutert, in der Art einer Gewindeverbindung zusammenwirken, d.h. dass ein erstes Gewindeelement der Betätigungsmittel in ein Gegengewindeelement des Widerlagers eingreift. Auch bei einer solchen Ausführungsform ist es möglich, eine Rotationsbewegung der Betätigungsmittel auf dem Weg von der Beladeposition in die Zwischenposition zu unterbinden und eine Rotationsbewegung mit gleichzeitigem Zusammenwirken von Gewinde und Gegengewinde erste ab Erreichen der Zwischenposition zu ermöglichen - hierzu müssen die Betätigungsmittel während der vorerwähnten ersten Bewegungsphase lediglich blockierende mit einem ortsfesten Bauteil, beispielsweise dem Widerlager zusammenwirken, derart, dass dieses Zusammenwirken ab Erreichen der Zwischenposition unterbunden ist - hierzu können die Betätigungsmittel beispielsweise mit einem Axialvorsatz mit einer Öffnung im Widerlager oder im Rahmen zusammenwirken, wobei der Fortsatz bei Erreichen der Zwischenposition freikommt und zusammen mit den Betätigungsmitteln rotierbar ist.

Im Folgenden wird nun die Funktionsweise der zuvor beschriebenen Anordnung gemäß der Fig. 1 bis 6 anhand der stark schematisierten Fig. 7 bis 15 erläutert, wobei im Hinblick auf einen bevorzugten konkreten Aufbau auf die vorstehend erläuterten Fig. 1 bis 6 mit zugehöriger Figurenbeschreibung verwiesen wird.

In Fig. 7 ist die Getränkezubereitungsvorrichtung 1 ausschnittsweise bei vollständig geöffneter Injektionseinheit 2 gezeigt. Zu erkennen ist ein in einer Beladeposition entlang der Verstellachse V angeordnetes erstes Injektionskammerteil 6, dessen fest mit diesem verbundene und einteilig mit diesem ausgebildete Getränkekapselaufnahme 5 (vgl. vorhergehende Figuren) aus Übersichtlichkeitsgründen nicht gezeigt ist. Da sich das erste Injektionskammerteil 6 in der Beladeposition befindet, sind die Betätigungsmittel 15 maxial in der Zeichnungsebene nach rechts von dem zweiten, ortsfesten Injektionskammerteil 7 beabstandet, welches an dem Führungsrahmen 29 mit seinen Führungsarmen 30, 31 angeordnet ist. Zu erkennen ist ferner das Hülsenelement 14 der Betätigungsmittel 15 von Verriegelungs- und Vorschubmitteln 22. In der gezeigten Beladeposition kann eine Getränkekapselaufnahme 5 des ersten Injektionskammerteils 6 mit einer Getränkesubratkapsel 3.

Nach der in Fig. 7 gezeigten Aufnahme der Getränkesubstratkapsel 3 wird das erste Injektionskammerteil 6 zusammen mit der Getränkekapselaufnahme 5 und der darauf aufliegenden Getränkesubstratkapsel 3 entlang der Verstellachse V in Richtung des zweiten Injektionskammerteils 7 verstellt, und zwar durch eine Axialkraftbeaufschlagung auf die Betätigungsmittel 15 entlang der Verstellachse V. Hierdurch werden die Betätigungsmittel 15, konkret umfassend das Hülsenelement 14 und das daran festgelegte Wechselwirkungselement 18 zusammen mit dem ersten Injektionskammerteil 6 axial rein translatorisch verstellt, und zwar relativ zu dem Widerlager 21 zwischen den Führungsarmen 30, 31. Während der Verstellbewegung ist, wie sich aus Fig. 7 ergibt, eine Rotation der Betätigungsmittel 15 um die hier mit der Verstellachse V zusammenfallende Rotationsachse unterbunden, und zwar aufgrund der Anschlagswechselwirkung der Axialfortsätze 23 mit dem Innenumfang der Durchgriffsöffnung 25 im Widerlager 21.

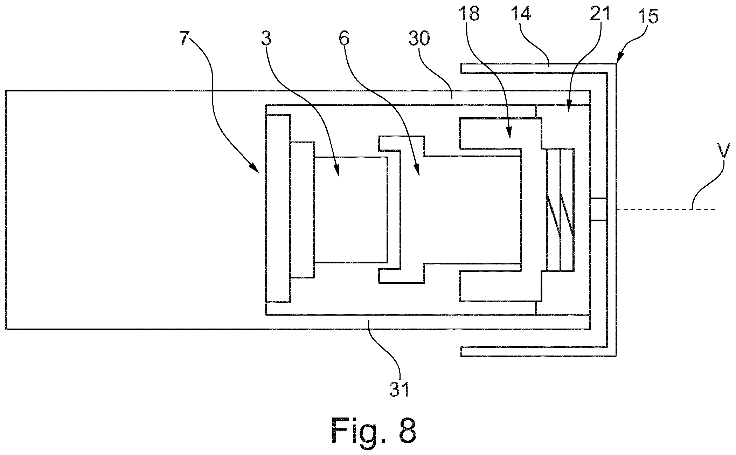

In Fig. 8 befindet sich die Getränkesubstratkapsel 3, genauer das erste Injektionskammerteil 6 mit der Getränkekapselaufnahme in einer Zwischenposition. In dieser Zwischenposition sind die Betätigungsmittel 15, konkret das Wechselwirkungselement 18 so weit axial relativ zu dem Widerlager 21 verstellt, dass die Blockierung der Rotationsbewegung aufgehoben ist und die Betätigungsmittel 15 in Umfangsrichtung um die Rotationsachse R bzw. V rotiert werden können.

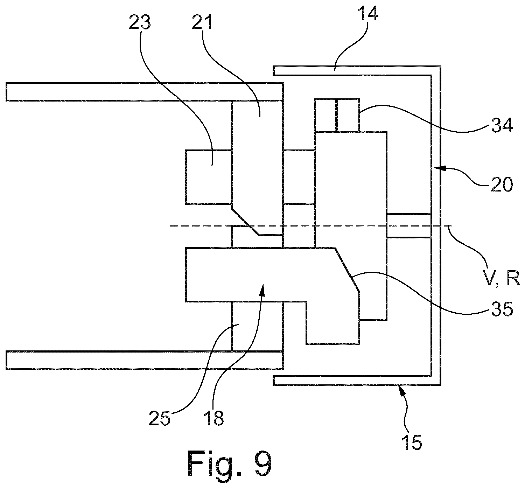

In Fig. 9 ist nochmals zur Verdeutlichung die Vorrichtung ausschnittsweise gezeigt, und zwar in einem Zwischenbereich während der Verstellbewegung von der in Fig. 7 gezeigten Beladeposition in die in Fig. 8 gezeigte Zwischenposition. Hier ist deutlich die Anschlagswechselwirkung des Wechselwirkungselementes 18 genauer von dessen Axialfortsätzen 23 mit dem Innenumfang der Durchgangsöffnung 25 des Widerlagers 21 zu erkennen.

In der in Fig. 8 angedeuteten Zwischenposition angekommen sind also die Betätigungsmittel 15 frei für die angedeutete Rotationsbewegung um die Rotationsachse R. Dabei stützen sich Abstützflächen 34, 35 der Betätigungsmittel 15, konkret des Wechselwirkungselementes 18 an korrespondierenden Gegenabstützflächen ab, die hier bevorzugt als Schrägflächen 32, 33 ausgebildet sind und bewirken dadurch einen axialen Vorschub entlang der Verstellachse V. Anders ausgedrückt wird also die Rotationsbewegung des Hülsenelementes 14 der Betätigungsmittel 15 umgewandelt in eine rein translatorische Verstellbewegung des ersten Injektionskammerteils 6 aus der Zwischenposition in eine Endposition.

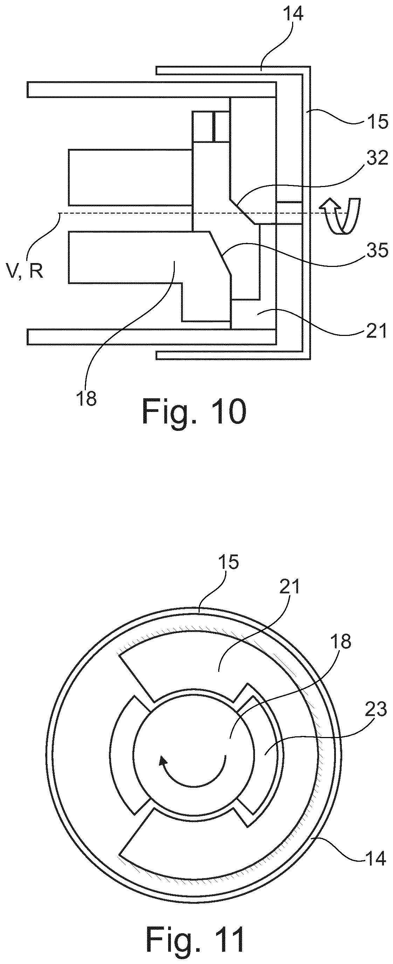

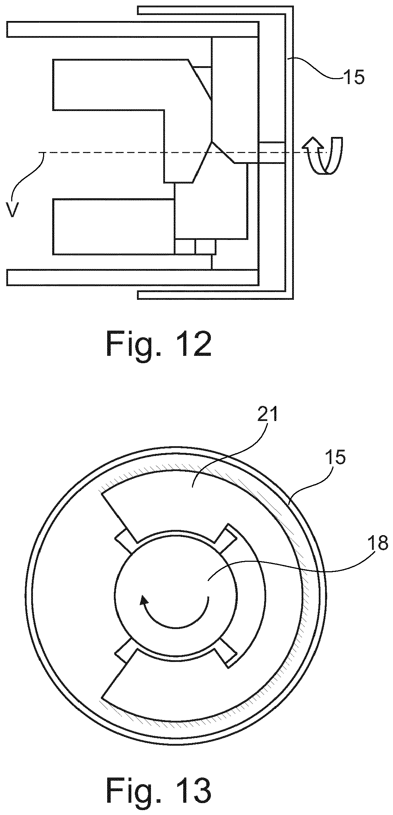

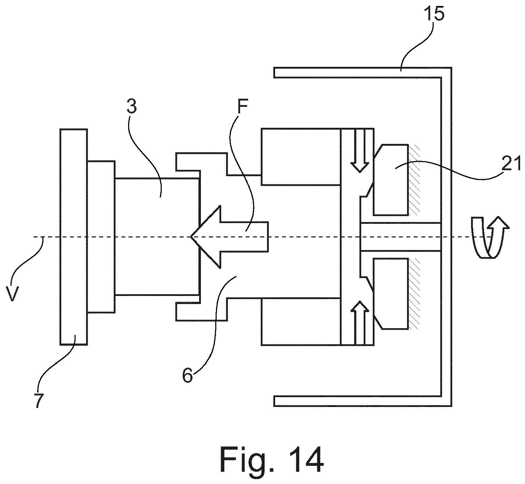

Fig. 11 zeigt den Beginn dieser Rotationsbewegung, während in Fig. 12 und 13 der Endpunkt der Rotationsbewegung gezeigt ist. Hier ist zum einen das Injektionskammerteil 6 (in den Fig. 12 und 13 nicht gezeigt) zusammen mit den Betätigungsmittel 15 so weit entlang der Verstellachse V verstellt, dass sich das erste Injektionskammerteil 6 in der Endposition befindet, wie diese in Fig. 14 dargestellt ist. In Fig. 14 ist zudem noch die Kraft F eingeblendet, mit der das erste Injektionskammerteil 6 die Getränkesubstratkapsel 3 gegen das zweite Injektionskammerteil 7 kraftbeaufschlagt aufgrund der axialen Verspannung durch Rotation des Betätigungselementes 15 und entsprechender Schrägflächenwechselwirkung zwischen Betätigungsmittel 15 und Widerlager 21.

In der Endposition kann nun der Injektionsprozess erfolgen.

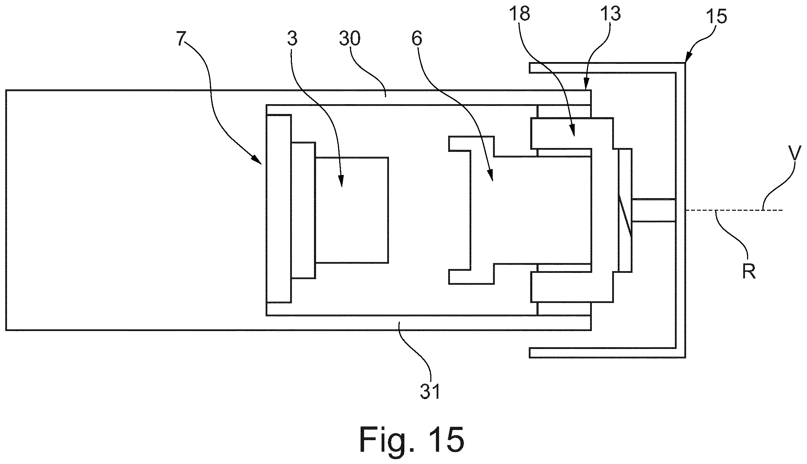

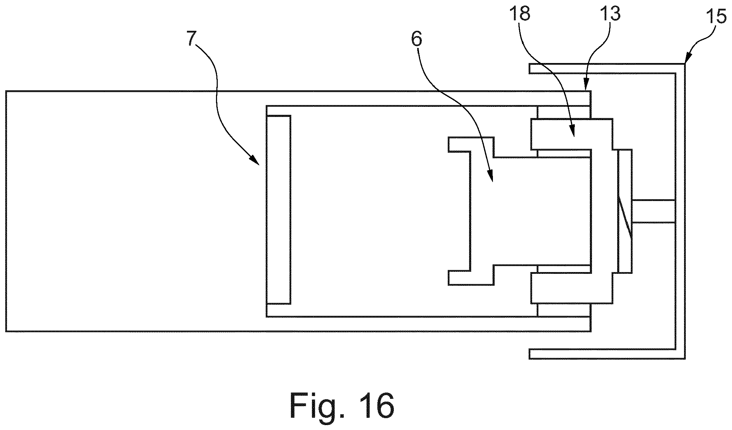

Nach Beendigung der Injektion werden die Betätigungsmittel 15 in Umfangsrichtung zurückrotiert um die Verstellachse V bis in die in Fig. 11 gezeigte Relativposition bezüglich des Widerlagers 21 wodurch die Injektionskammer entriegelt wird. Hierdurch ist es nun möglich, wie in Fig. 15 gezeigt, durch Zugkraftbeaufschlagung der Betätigungsmittel 15 diese zusammen mit dem ersten Injektionskammerteil 6 zurück in die Beladeposition zu verstellen. Die Getränkesubstratkapsel 3 wird von nicht gezeigten Rückhaltemitteln im Bereich des zweiten Injektionskammerteils 7 zurückgehalten und kann nach Herausverfahren der Getränkekapselaufnahme 5 aus einem Bereich unterhalb der Getränkesubstratkapsel 3 nach unten herausfallen, dass sich die Situation gemäß Fig. 16 ergibt.

Das erste Injektionskammerteil 6 ist nun bereit zur Aufnahme einer weiteren Getränkesubstratkapsel 3.

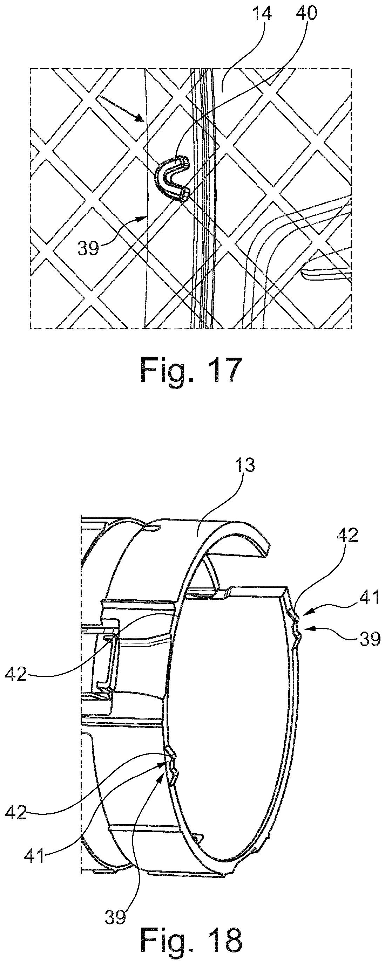

Im Folgenden wird anhand der Fig. 17 und 18 die Funktionsweise von bevorzugt vorgesehenen Haptikrückkopplungsmitteln 39 erläutert, die in dem gezeigten Ausführungsbeispiel das Erreichen der in den Fig. 1 und 13 gezeigten Endpunkte der Rotationsbewegung der Betätigungsmittel 15, genauer des Hülsenelementes 14 rückkoppeln, und zwar durch eine axiale Rückkopplungsbewegung des Hülsenelementes 14 entlang der Verstellachse V.

Besonders bevorzugt ist es, wenn wie hier, die Haptikrückkopplungsmittel 39 zusätzlich zu die Rotationsbewegung der Betätigungsmittel 15 begrenzenden Anschlägen vorgesehen sind, dass also durch die Haptikrückkopplungsmittel 39 der Nutzer frühzeitig, d.h. kurz vor Erreichen der Anschlagsposition durch haptische Rückkopplung mitgeteilt bekommt, dass der Kraftaufwand zur Umsetzung der Rotationsbewegung der Betätigungsmittel reduziert werden kann.

Die Haptikrückkopplungsmittel 39 umfassen hierzu am Innenumfang des Hülsenelementes 14 vorgesehene, hier hakenförmige Rastelemente 40 (von denen in Fig. 17 nur eines dargestellt ist), wobei jedem Rastelement 40 ein Gegenrastelement 41 am Rahmen 14 zugeordnet ist, und zwar an einer Rahmenstirnseite 42, die von der Brühkammer weggerichtet ist. Durch Verdrehen des Hülsenelementes 14 kommen die Rastelemente 40 in Kontakt mit den jeweils eine Anlaufschräge 42 aufweisenden Gegenrastelementen 41 und Rasten nach Überfahren dieser Schräge in entsprechenden Ausnehmungen der Rastelemente 40 ein - hieraus resultiert eine haptische axiale Rückkopplungsbewegung des Hülsenelementes 14, die unmittelbar vom Benutzer gespürt bzw. registriert wird.

### Bezugszeichen

- 1: Getränkezubereitungsvorrichtung
- 2: Injektionseinheit
- 3: Getränkesubstratkapsel
- 4: Injektionskammer
- 5: Getränkekapselaufnahme
- 6: erstes Injektionskammerteil
- 7: zweites Injektionskammerteil
- 8: erste Elastomerdichtung
- 9: zweite Elastomerdichtung
- 10: Zuführleitung
- 11: Auslass
- 12: Schraube
- 13: Rahmen
- 14: Hülsenelement
- 15: Betätigungsmittel
- 16: Radialfortsätze
- 17: Umfangsnut
- 18: Wechselwirkungselement
- 19: Zentralschraube
- 20: Hülsenboden
- 21: Widerlager
- 22: Verriegelungs- und Vorschubmittel
- 23: Axialfortsätze
- 24: Innenumfang
- 25: Durchgriffsöffnung
- 26: Außenseite
- 27: Innenseite
- 28: Dekorblende
- 29: Führungsrahmen
- 30: Führungsarm
- 31: Führungsarm
- 32: Schrägfläche (Gegenfläche)
- 33: Schrägfläche (Gegenfläche)
- 34: Abstützfläche (Schrägfläche)
- 35: Abstützfläche (Schrägfläche)
- 36: Mantelfläche
- 37: Öffnung
- 38: Verbindungsabschnitt
- 39: Haptikrückkopplungsmittel
- 40: Rastmittel
- 41: Gegenrastmittel
- 42: Anlaufschräge

- F: Kraft
- V: Verstellachse
- R: Rotationsachse

## Patentansprüche

1. Getränkezubereitungsvorrichtung (1) zum Herstellen von Getränken aus Getränkesubstratkapseln (3), insbesondere Kaffeekapseln, mit einer Injektionseinheit (2) zum Auflösen und/oder Auslaugen von in einer Getränkesubstratkapsel (3) bevorratetem Getränkesubstrat, und mit Wasserversorgungsmitteln zum Versorgen der Injektionseinheit (2) mit Wasser, wobei die Injektionseinheit (2) eine Injektionskammer (4) zur Aufnahme der Getränkesubstratkapsel (3) aufweist, umfassend ein erstes Injektionskammerteil (6) das translatorisch relativ zu einem, bevorzugt ortsfesten, zweiten Injektionskammerteil (7) zum Öffnen und Schließen der Injektionskammer (4) entlang einer Verstellachse (V) verstellbar ist, wobei das erste Injektionskammerteil (6) eine Getränkekapselaufnahme (5) aufweist, um die Getränkesubstratkapsel (3) bei geöffneter Injektionskammer (4) an einer Beladungsposition aufnehmen zu können und dass das erste Injektionskammerteil (6) zusammen mit der Getränkekapselaufnahme (5) translatorisch zu einer Zwischenposition in Richtung des zweiten Injektionskammerteils (7) entlang der Verstellachse (V) verstellbar ist, und dass dem ersten Injektionskammerteil (6) Verriegelungs- und Vorschubmittel (22) zugeordnet sind, die derart ausgebildet und angeordnet sind, dass das erste Injektionskammerteil (6) durch Rotieren von Betätigungsmitteln (15) der Verriegelungs- und Vorschubmittel (22) um eine Rotationsachse (R) translatorisch aus der Zwischenposition in Richtung des zweiten Injektionskammerteils (7) entlang der Verstellachse (V) in eine Endposition verstellbar ist, in der die Injektionskammer (4) geschlossen und die Injektionskammer (4) verriegelt ist, wobei die Rotationsachse (R) mit der Verstellachse (V) zusammenfällt, und wobei das erste Injektionskammerteil (6) bei seiner translatorischen Verstellbewegung relativ zu einem, bevorzugt ortsfesten, Widerlager (21) verstellbar ist, an dem sich die Betätigungsmittel (15) durch Rotieren der Betätigungsmittel (15) ausgehend von der Zwischenposition derart abstützen, dass die Rotationsbewegung der Betätigungsmittel in die translatorische Verstellbewegung des ersten Injektionskammerteils (6) gemeinsam mit den Betätigungsmitteln (15) von der Zwischenposition in die Endposition umwandelbar ist,
**dadurch gekennzeichnet,**
**dass** das erste Injektionskammerteil (6) bei seiner translatorischen Verstellbewegung entlang eines Führungsrahmens (29) verstellbar ist, der zwei Führungsarme (30, 31) aufweist und dass das Widerlager (21) als, insbesondere separates, Verbindungselement zwischen den Führungsarmen (30, 31) ausgebildet und angeordnet ist.

2. Getränkezubereitungsvorrichtung nach Anspruch 1,
**dadurch gekennzeichnet,**
**dass** die Führungsarme (30, 31) parallel sind.

3. Getränkezubereitungsvorrichtung nach Anspruch 2,
**dadurch gekennzeichnet,**
**dass** das Widerlager von den Betätigungsmittel (15) in der Zwischenposition entlang der Verstellachse (V) ausgehend von einer von dem zweiten Injektionskammerteil (7) abgewandten Außenseite (25) des Widerlagers (21) bis zu einer dem zweiten Injektionskammerteil (7) zugewandten Innenseite (27) des Widerlagers (21) durch- und/oder umgriffen ist, und dass sich die Verriegelungs- und Vorschubmittel (22) über einen, bevorzugt drehfest mit den Betätigungsmitteln (15) verbundenen oder einteilig mit diesen ausgebildeten Abstützabschnitt durch Rotieren der Betätigungsmittel (15) nach Erreichen der Zwischenposition axial auf der Innenseite (27) des Widerlagers (21) über und/oder an mindestens eine Schrägfläche (34, 35) abstützen.

4. Gertränkezubereitungsvorrichtung nach Anspruch 3,
**dadurch gekennzeichnet,**
**dass** das Widerlager und die Betätigungsmittel (15), insbesondere ein drehfest mit den Betätigungsmitteln (15) verbundener oder einteilig mit diesen ausgebildeter Abstützabschnitt, nach Erreichen der Zwischenposition durch Rotieren der Betätigungsmittel (15) in der Art einer Gewindeverbindung zusammenwirken.

5. Getränkezubereitungsvorrichtung nach einem der Ansprüche 1 bis 4,
**dadurch gekennzeichnet,**
**dass** der translatorische Verstellweg des ersten Injektionskammerteils (6) von der Beladeposition in die Zwischenposition um ein Vielfaches größer ist als der translatorische Verstellweg des ersten Injektionskammerteils (6) von der Zwischenposition in die Endposition und dass die Zwischenposition so relativ zu bevorzugt als Aufstechmitteln ausgebildeten Öffnungsmitteln der Getränkezubereitungsvorrichtung (1) positioniert ist, dass eine in der Getränkekapselaufnahme (5) aufgenommene Getränkesubstratkapsel (3) erst bei der translatorischen Verstellbewegung von der Zwischenposition in die Endposition auf mindestens einer Stirnseite, vorzugsweise auf beiden voneinander abgewandten Stirnseiten der Getränkesubstratkapsel (3) zur Injektion von Wasser und zum Ausleiten des Getränks öffenbar ist.

6. Getränkezubereitungsvorrichtung nach einem der vorhergehenden Ansprüche,
**dadurch gekennzeichnet,**
**dass** eine Rotierbarkeit der Betätigungsmittel (15) um die Rotatinsachse während der, insbesondere gesamten, translatorischen Verstellbewegung des ersten Injektionskammerteils (6) von Beladeposition bis zur Zwischenposition blockiert ist.

7. Getränkezubereitungsvorrichtung nach Anspruch 6,
**dadurch gekennzeichnet,**
**dass** sich die Betätigungsmittel (15) zum Blockieren von deren Rotierbarkeit während der translatorischen Verstellbewegung bis zum Erreichen der Zwischenposition in Umfangsrichtung an dem Widerlager (21), insbesondere innerhalb mindestens einer Durchgriffsöffnung (25) des Widerlagers (21), an dem Widerlager (21) abstützen.

8. Getränkezubereitungsvorrichtung nach einem der vorhergehenden Ansprüche,
**dadurch gekennzeichnet,**
**dass** die relativ zu dem ersten Injektionskammerteil (6) rotierbaren Betätigungsmittel (15) zur Übertragung von Zugkräften zum translatorischen Verstellen des ersten Injektionskammerteils (6) von der Zwischenposition in in die Beladeposition mechanisch gekoppelt sind.

9. Getränkezubereitungsvorrichtung nach einem der Ansprüche 2 bis 8,
**dadurch gekennzeichnet,**
**dass** das Widerlager (21) beabstandet zu einem die Führungsarme (30, 31) einteilig verbindenden Verbindungsabschnitt (38) angeordnet ist.

10. Getränkezubereitungsvorrichtung nach einem der vorherigen Ansprüche,
**dadurch gekennzeichnet,**
**dass** das erste Injektionskammerteil (6) an einem Rahmen (13) angeordnet, insbesondere fixiert ist, der bei der translatorischen Verstellbewegung des ersten Injektionskammerteils (6) an dem Führungsrahmen (29) geführt ist, wobei bevorzugt die Führungsarme (30, 31) entlang der Verstellachse (V) in den Rahmen (13) hineinragen und/oder das Widerlager (21) in dem Rahmen (13) angeordnet ist.

11. Getränkezubereitungsvorrichtung nach einem der vorhergehenden Ansprüche,
**dadurch gekennzeichnet,**
**dass** die Betätigungsmittel (15) ein, vorzugsweise einen endseitigen Hülsenboden (20) aufweisendes, bevorzugt kreiszylindrisch konturiertes, vorzugsweise eine außenumfängliche Grifffläche zum manuellen Betätigen aufweisendes, Hülsenelement (14) aufweisen, das bevorzugt entlang der Verstellachse (V) das Widerlager (21) übergreift und das bevorzugt radial nach innen in eine außenumfängliche Nut des Rahmens (13) eingreift.

12. Getränkezubereitungsvorrichtung nach Anspruch 11,
**dadurch gekennzeichnet,**
**dass** in der Mantelfläche (36) des Hülsenelements (14) eine sich in Umfangsrichtung erstreckende, bevorzugt umfangsgeschlossene Öffnung (37) für einen Getränkeauslass angeordnet ist, die von dem Getränkeauslass in radialer Richtung nach außen durchsetzt ist und/oder von fertigem Getränk in radialer Richtung nach außen durchströmbar ist.

13. Getränkezubereitungsvorrichtung nach einem der vorhergehenden Ansprüche,
**dadurch gekennzeichnet,**
**dass** die Rotationsbewegung der Betätigungsmittel (15) nur über einen begrenzten Umfangswinkel, von vorzugsweise weniger als 180°, bevorzugt weniger als 120°, möglich ist, wobei die Rotationsbewegungsbegrenzung bevorzugt durch eine Anschlagswechselwirkung zwischen den Betätigungsmitteln (15), insbesondere dem Hülsenelement (14), und dem Rahmen (13) realisiert ist.

14. Verfahren zum Betreiben einer Getränkezubereitungsvorrichtung (1) nach einem der vorhergehenden Ansprüche, **gekennzeichnet durch** die Schritte:
- Einlegen einer Getränkesubstratkapsel (3) in die Getränkekapselaufnahme (5) des ersten Injektionskammerbauteils (6) bei in der Beladeposition befindlichem ersten Injektionskammerteil (6),
- Translatorisches Verstellen des ersten Injektionskammerteils (6), bevorzugt durch Axial beaufschlagung der Betätigungsmittel (15), von der Beladeposition entlang der Verstellachse (V) in die Zwischenposition;
- Schließen der Injektionskammer (4), bevorzugt unter gleichzeitigem Klemmen der Getränkesubstratkapsel (3) zwischen dem ersten (6) und dem zweiten Injektionskammerteil (7), durch Rotieren der Betätigungsmittel (15) der Verriegelungs- und Vorschubmittel (22) um die sich entlang der Verstellachse (V) erstreckende Rotationsachse (R) und dadurch translatorisches Verstellen des ersten Injektionskammerteils (6) aus der Zwischenposition in Richtung des zweiten Injektionskammerteils (7) in die Endposition und Verriegeln der Injektionskammer (4), wobei sich beim Rotieren der Betätigungsmittel (15) ausgehend von der Zwischenposition die Verriegelungs- und Vorschubmittel (22) mittels Abstützflächen (34, 35) derart an einem, vorzugsweise entlang der Verstellachse (V) von den Verriegelungs- und Vorschubmittel (22) durchsetzten und/oder umgriffenen, zwischen zwei Führungsarmen (30, 31) angeordneten und ausgebildeten Widerlager (21) abstützen, dass die Rotationbewegung der Betätigungsmittel (15) in die gemeinsame translatorische Verstellbewegung des ersten Injektionskammerteils (6) und der Betätigungsmittel (15) in die Endposition umgewandelt wird.

## Claims

1. A beverage preparation device (1) for preparing beverages from beverage substrate capsules (3), in particular coffee capsules, the beverage preparation device (1) comprising an injection unit (2) for dissolving and/or leaching a beverage substrate kept in a beverage substrate capsule (3), and comprising water supply means for supplying the injection unit (2) with water, the injection unit (2) having an injection chamber (4) for receiving the beverage substrate capsule (3), the injection chamber (4) comprising a first injection chamber part (6) which can be displaced in a translational manner relative to a preferably fixed second injection chamber part (7) along a displacement axis (V) to open and close the injection chamber (4), the first injection chamber part (6) having a beverage capsule reception (5) so as to be able to receive the beverage substrate capsule (3) at a loading position when the injection chamber (4) is open, and that the first injection chamber part (6) can be translationally displaced together with the beverage capsule reception (5) to an intermediate position in the direction of the second injection chamber part (7) along the displacement axis (V), and that locking and advancing means (22) are assigned to the first injection chamber part (6), the locking and advancing means (22) being realized and disposed in such a manner that the first injection chamber part (6) is translationally displaceable from the intermediate position in the direction of the second injection chamber part (7) along the displacement axis (V) and into an end position, in which the injection chamber (4) is closed and the injection chamber (4) is locked, by rotating actuation means (15) of the locking and advancing means (22) about an axis of rotation (R), the axis of rotation (R) coinciding with the displacement axis (V), and the first injection chamber part (6) being displaceable during its translational displacement relative to a preferably fixed abutment (21) on which the actuation means (15) are supported by rotating the activation means (15) from the intermediate position in such a manner that the rotation of the actuation means can be converted into the translational displacement of the first injection chamber part (6) together with the actuation means (15) from the intermediate position into the end position,
**characterized in that**
the first injection chamber part (6) can be displaced along a guide frame (29) having two guide arms (30, 31) during its translational displacement, and that the abutment (21) is realized and disposed as a connecting element, in particular a separate connecting element, between the guide arms (30, 31).

2. The beverage preparation device according to claim 1,
**characterized in that**
the guide arms (30, 31) are parallel.

3. The beverage preparation device according to claim 2,
**characterized in that**,
the abutment is penetrated and/or surrounded by the actuation means (15) in the intermediate position along the displacement axis (V) from an exterior (25) of the abutment (21) facing away from the second injection chamber part (7) to an inner side (27) of the abutment (21) facing the second injection chamber part (7), and that, with a supporting section which is preferably non-rotatably connected to or realized in one piece with the actuation means (15), the locking and advancing means (22) are axially supported on the inner side (27) of the abutment (21) via and/or at at least one sloping surface (34, 35) by rotating the actuation means (15) after reaching the intermediate position.

4. The beverage preparation device according to claim 3,
**characterized in that**
the abutment and the actuation means (15), in particular a supporting section which is non-rotatably connected to or realized in one piece with the actuation means (15), interact like a thread connection by rotating the actuation means (15) after reaching the intermediate position.

5. The beverage preparation device according to any one of claims 1 to 4,
**characterized in that**
the translational displacement path of the first injection chamber part (6) from the loading position to the intermediate position is many times longer than the translational displacement path of the first injection chamber part (6) from the intermediate position into the end position, and that the intermediate position is placed relative to opening means of the beverage preparation device (1), which are preferably realized as piercing means, in such a manner that only during the translational displacement from the intermediate position to the end position and not before can a beverage substrate capsule (3) received in the beverage capsule reception (5) be opened at at least one end face, preferably at both end faces of the beverage substrate capsule (3) facing away from one another, for injecting water and for discharging the beverage.

6. The beverage preparation device according to any one of the preceding claims,
**characterized in that**
the rotatability of the actuation means (15) around the axis of rotation is blocked during the translational displacement, in particular the entire translational displacement, of the first injection chamber part (6) from the loading position to the intermediate position.

7. The beverage preparation device according to claim 6,
**characterized in that**
the actuation means (15) are supported on the abutment (21), in particular inside at least one through hole (25) of the abutment (21), in the circumferential direction in order to block the rotatability of said actuation means during the translational displacement until the intermediate position is reached.

8. The beverage preparation device according to any one of the preceding claims,
**characterized in that**
the actuation means (15), which can be rotated relatively to the first injection chamber part (6), are mechanically coupled in order to transmit tractive forces for the translational displacement of the first injection chamber part (6) from the intermediate position into the loading position.

9. The beverage preparation device according to any one of claims 2 to 8,
**characterized in that**
the abutment (21) is spaced from a connecting section (38) connecting the guide arms (30, 31) in one piece.

10. The beverage preparation device according to any one of the preceding claims,
**characterized in that**
the first injection chamber part (6) is disposed on, in particular fixed to, a frame (13) which is guided on the guide frame (29) during the translational displacement of the first injection chamber part (6), the guide arms (30, 31) preferably protruding into the frame (13) along the displacement axis (V) and/or the abutment (21) preferably being disposed in the frame (13).

11. The beverage preparation device according to any one of the preceding claims,
**characterized in that**
the actuation means (15) have a sleeve element (14) which preferably has a sleeve base (20) at the end, which is preferably cylindrically contoured, which preferentially has an outer circumferential gripping surface for a manual handling and which covers the abutment (21), preferably along the displacement axis (V), and which engages, preferably radially inward, into an outer circumferential groove of the frame (13).

12. The beverage preparation device according to claim 11,
**characterized in that**,
a preferably circumferentially closed opening (37) for a beverage outlet which extends in the circumferential direction and which is penetrated by the beverage outlet in the outward radial direction and/or through which the finished beverage can flow outward in the radial direction is disposed in the wall surface (36) of the sleeve element (14).

13. The beverage preparation device according to any one of the preceding claims,
**characterized in that**,
the actuation means (15) cannot rotate but by a limited circumferential angle of preferentially less than 180°, preferably less than 120 °, the rotation limitation being preferably realized by means of a stop interaction between the actuation means (15), in particular the sleeve element (14), and the frame (13).

14. A method for operating a beverage preparation device (1) according to any one of the preceding claims, **characterized by** the steps of:
- placing a beverage substrate capsule (3) in the beverage capsule reception (5) of the first injection chamber part (6) when the first injection chamber part (6) is in the loading position;
- translationally displacing the first injection chamber part (6), preferably by means of an axial application of the actuation means (15), along the displacement axis (V) from the loading position into the intermediate position;
- closing the injection chamber (4), preferably while clamping the beverage substrate capsule (3) between the first (6) and the second injection chamber part (7), by rotating the actuation means (15) of the locking and advancing means (22) around an axis of rotation (R) extending along the displacement axis (V) and thereby translationally displacing the first injection chamber part (6) from the intermediate position in the direction of the second injection chamber part (7) and into the end position and locking the injection chamber (4), the locking and advancing means (22), during the rotation of the actuation means (15) from the intermediate position, being supported on an abutment (21), which is penetrated and/or surrounded by the locking and advancing means (22) along the displacement axis (V) and which is disposed and realized between two guide arms (30, 31), via sloping surfaces (34, 35) in such a manner that the rotation of the actuation means (15) is converted into the joint translational displacement of the first injection chamber part (6) and the actuation means (15) into the end position.

## Revendications

1. Dispositif de préparation de boissons (1) destiné à préparer des boissons à partir des capsules de substrat de boisson (3), notamment des capsules de café, le dispositif de préparation de boissons (1) comprenant une unité d'injection (2) destinée à dissoudre et/ou lixivier un substrat de boisson logé dans une capsule de substrat de boisson (3), et comprenant des moyens d'alimentation en eau destinés à alimenter l'unité d'injection (2) en eau, l'unité d'injection (2) ayant une chambre d'injection (4) destinée à recevoir la capsule de substrat de boisson (3), la chambre d'injection (4) comprenant une première partie de chambre d'injection (6) qui est déplaçable en translation par rapport à une deuxième partie de chambre d'injection (7), de préférence fixe, le long d'un axe de déplacement (V) afin d'ouvrir et fermer la chambre d'injection (4), la première partie de chambre d'injection (6) ayant un logement de capsule de boisson (5) pour loger la capsule de substrat de boisson (3) dans une position de chargement quand la chambre d'injection (4) est ouverte, et que la première partie de chambre d'injection (6), avec le logement de capsule de boisson (5), est déplaçable en translation vers une position intermédiaire en direction de la deuxième partie de chambre d'injection (7) le long de l'axe de déplacement, et que des moyens de verrouillage et d'avancement (22) sont assignés à la première partie de chambre d'injection (6), les moyens de verrouillage et d'avancement (22) étant formés et disposés de telle manière que la première partie de chambre d'injection (6) est déplaçable en translation de la position intermédiaire en direction de la deuxième partie de chambre d'injection (7) le long de l'axe de déplacement (V) et dans une position finale, dans laquelle la chambre d'injection (4) est fermée et la chambre d'injection (4) est verrouillée, en faisant tourner des moyens d'actionnement (15) des moyens de verrouillage et d'avancement (22) autour d'un axe de rotation (R), l'axe de rotation (R) coïncidant avec l'axe de déplacement (V), et la première partie de chambre d'injection (6) étant déplaçable, lors de son déplacement en translation, par rapport à une butée (21), de préférence fixe, sur laquelle les moyens d'actionnement (15) s'appuient en faisant tourner les moyens d'actionnement (15) à partir de la position intermédiaire de telle manière que la rotation des moyens d'actionnement est convertible en le déplacement en translation de la première partie de chambre d'injection (6) avec les moyens d'actionnement (15) de la position intermédiaire à la position finale,
**caractérisé en ce que**
la première partie de chambre d'injection (6) est déplaçable le long d'un cadre de guidage (29) qui a deux bras de guidage (30, 31) pendant son déplacement en translation, et que la butée (21) est formée et disposée comme un élément de jonction, notamment séparé, entre les bras de guidage (30, 31).

2. Dispositif de préparation de boissons selon la revendication 1,
**caractérisé en ce que**
les bras de guidage (30, 31) sont parallèles.

3. Dispositif de préparation de boissons selon la revendication 2,
**caractérisé en ce que**
la butée (21) est traversée et/ou enserrée par les moyens d'actionnement (15) dans la position intermédiaire le long de l'axe de déplacement (V) à partir d'un côté extérieur (25) de la butée (21) qui est détourné de la deuxième partie de chambre d'injection (7) jusqu'à un côté intérieur (27) de la butée (21) qui fait face à la deuxième partie de chambre d'injection (7), et que, par une section d'appui qui est reliée, de préférence de manière solidaire en rotation, avec les moyens d'actionnement (15) ou formée monobloc avec les moyens d'actionnement (15), les moyens de verrouillage et d'avancement (22) s'appuient sur le côté intérieur (27) de la butée (21), axialement au par et/ou sur au moins une surface inclinée (34, 35) en faisant tourner les moyens d'actionnement (15) après avoir atteint la position intermédiaire.

4. Dispositif de préparation de boissons selon la revendication 3,
**caractérisé en ce que**
la butée et les moyens d'actionnement (15), notamment une section d'appui qui est reliée de manière solidaire en rotation avec les moyens d'actionnement (15) ou formée monobloc avec les moyens d'actionnement, coopèrent à la façon d'une liaison filetée après avoir atteint la position intermédiaire en faisant tourner les moyens d'actionnement (15).

5. Dispositif de préparation de boissons selon l'une quelconque des revendications 1 à 4,
**caractérisé en ce que**
la course de déplacement en translation de la première partie de chambre d'injection (6) de la position de chargement à la position intermédiaire est plusieurs fois plus longue que la course de déplacement en translation de la première partie de chambre d'injection (6) de la position intermédiaire à la position finale, et que la position intermédiaire est positionnée par rapport à des moyens d'ouverture du dispositif de préparation de boissons (1), qui sont de préférence formés comme moyens de perçage, de telle manière qu'une capsule de substrat de boisson (3) logée dans le logement de capsule de boisson (5) ne peut être ouverte sur au moins une face, de préférence sur les deux faces opposées de la capsule de substrat de boisson (3) pour injecter de l'eau et pour extraire la boisson que pendant le déplacement en translation de la position intermédiaire à la position finale.

6. Dispositif de préparation de boissons selon l'une quelconque des revendications précédentes,
**caractérisé en ce que**
la rotation des moyens d'actionnement (15) autour l'axe de rotation est bloquée pendant le déplacement en translation, notamment pendant tout le déplacement en translation, de la première partie de chambre d'injection (6) de la position de chargement à la position intermédiaire.

7. Dispositif de préparation de boissons selon la revendication 6,
**caractérisé en ce que**
les moyens d'actionnement (15) s'appuient sur la butée (21), notamment à l'intérieur d'au moins une ouverture de passage (25) de la butée (21), dans la direction circonférentielle pour bloquer leur rotation pendant le déplacement en translation jusqu'à l'atteinte de la position intermédiaire.

8. Dispositif de préparation de boissons selon l'une quelconque des revendications précédentes,
**caractérisé en ce que**
les moyens d'actionnement (15), qui peuvent être tournés par rapport à la première partie de chambre d'injection (6), sont couplés mécaniquement pour transmettre des forces de traction pour le déplacement en translation de la première partie de chambre d'injection (6) de la position intermédiaire à la position de chargement.

9. Dispositif de préparation de boissons (1) selon l'une quelconque des revendications 2 à 8,
**caractérisé en ce que**
la butée (21) est espacée d'une section de jonction (38) qui joint les bras de guidage (30, 31) de manière monobloc.

10. Dispositif de préparation de boissons selon l'une quelconque des revendications précédentes,
**caractérisé en ce que**
la première partie de chambre d'injection (6) est disposée, notamment fixée, sur un cadre (13) qui est guidé sur le cadre de guidage (29) pendant le déplacement en translation de la première partie de chambre d'injection (6), les bras de guidage (30, 31) saillant, de préférence, dans le cadre (13) le long de l'axe de déplacement (V) et/ou la butée (21) étant disposée, de préférence, dans le cadre (13).

11. Dispositif de préparation de boissons selon l'une quelconque des revendications précédentes,
**caractérisé en ce que**
les moyens d'actionnement (15) ont un élément de douille (14) qui a, de préférence, un fond de douille (20) du côté d'extrémité et qui est profilé, de préférence, en forme d'un cylindre circulaire et qui a, de préférence, une surface de prise circonférentielle extérieure pour l'actionnement manuel et qui recouvre la butée (21), de préférence le long de l'axe de déplacement (V), et qui s'engage, de préférence radialement vers l'intérieur, dans une rainure circonférentielle extérieure du cadre (13).

12. Dispositif de préparation de boissons selon la revendication 11,
**caractérisé en ce**
**qu'**une ouverture (37) pour une sortie de boisson, qui a de préférence une circonférence fermée et qui s'étend dans la direction circonférentielle et qui est traversée par la sortie de boisson dans une direction radiale vers l'extérieur et/ou qui peut être traversée par la boisson finie, est disposée dans la surface latérale (36) de l'élément de douille (14).

13. Dispositif de préparation de boissons selon l'une quelconque des revendications précédentes,
**caractérisé en ce que**
la rotation des moyens d'actionnement (15) n'est possible que par un angle circonférentiel limité, préférentiellement inférieur à 180 °, de préférence inférieur à 120 °, la limitation de rotation étant réalisée, de préférence, par une interaction de butée entre les moyens d'actionnement (15), notamment l'élément de douille (14), et le cadre (13).

14. Procédé de fonctionnement d'un dispositif de préparation de boissons (1) selon l'une quelconque des revendications précédentes, **caractérisé par** les étapes consistant à :
- insérer une capsule de substrat de boisson (3) dans le logement de capsule de boisson (5) de la première partie de chambre d'injection (6) quand la première partie de chambre d'injection (6) est dans la position de chargement ;
- déplacer en translation la première partie de chambre d'injection (6), de préférence par l'application axiale des moyens d'actionnement (15), de la position de chargement le long de l'axe de déplacement (V) à la position intermédiaire ;
- fermer la chambre d'injection (4), de préférence tout en serrant la capsule de substrat de boisson (3) entre la première (6) et la deuxième partie de chambre d'injection (7), en faisant tourner les moyens d'actionnement (15) des moyens de verrouillage et d'avancement (22) autour de l'axe de rotation (R) s'étendant le long de l'axe de déplacement (V) et ainsi déplacer en translation la première partie de chambre d'injection (6) de la position intermédiaire en direction de la deuxième partie de chambre d'injection (7) et dans la position finale et verrouiller la chambre d'injection (4), les moyens de verrouillage et d'avancement (22), pendant la rotation des moyens d'actionnement (15) à partir de la position intermédiaire, s'appuyant sur une butée (21), qui est traversée et/ou enserrée par les moyens de verrouillage et d'avancement (22), de préférence le long de l'axe de déplacement (V), et qui est disposée et formée entre deux bras de guidage (30, 31), par des surfaces inclinées (34, 35) de telle manière que la rotation des moyens d'actionnement (15) est convertie en le déplacement en translation commun de la première partie de chambre d'injection (6) et des moyens d'actionnement (15) à la la position finale.
